# EUROPEAN PATENT APPLICATION

(11) **EP 3 462 393 A1**
(43) Date of publication of application: **03.04.2019**
(21) Application number: 18204830.6
(22) Date of filing: 28.06.2012
(51) Int. Cl.: G06Q 10/10, G06Q 50/06, G06Q 10/06

(54) **DATA INTEGRATION**

(62) Divisional of application: 12740477.0
(71) Applicant: ista International GmbH, 45131 Essen (DE)
(72) Inventor: JUSTESEN, Peter Lindbjerg, 7430 Ikast (DK)
(74) Representative: Patentgruppen A/S

(57) **Abstract**

The invention relates to a system and method for data integration between a real estate administrator and a heat sub-metering service provider. The data integration system comprises automated data exchange by pushing and pulling data while maintaining a system of data identifiers. The data integration system can facilitate alerting on errors, warnings or fraud.

## Description

### Field of the invention

The present invention relates to integration of data systems of heat sub-metering service providers and their customers, typically real estate administrators or owners.

### Background of the invention

Consumption of heating in tenanted properties with several renters is usually billed according to the individual renter's share of the total consumption in the property. It can be a major task to record the individual tenants' consumption, analyse the results, make a weighed distribution of the total costs to the individual tenants and finally bill them. Therefore real estate administrators or owners typically outsource this work to specialised service providers, in the following referred to as heat sub-metering service providers.

However, for the sub-metering service provider to correctly record and bill tenants, the property owner or manager has to hand over a lot of information about the property and the tenants to the sub-metering service provider, including e.g. bills and specifications from utility companies, on account payments from tenants, contracts and agreements with tenants, etc. While the sub-metering service provider may be able to more or less reliably obtain these kinds of information from the owner or manager and insert them in the service provider's management system, yet prone to errors, it is, however, an even bigger source for errors that tenants usually change from time to time. At present specified billing is usually performed only once a year and payments on account are used to level the costs out over a year. Hence, if a tenant moves out or otherwise have his obligations changed between billings, the cost distribution should consider when the obligations changed, and who should be billed for heat consumption before and after that date, respectively. It is also not unusual that an apartment has three or even more different tenants through one billing period. The information delivered from the property owner or manager to the service provider in this regard have to be very accurate and carefully inserted into the service provider's management system in order to not cause inaccurate billing. A high level of accuracy and transparency is typically required by authorities, real estate administrators and the tenants when it comes to heating bills.

When the sub-metering service provider has established a distribution of costs between tenants, the property owner or manager needs to receive information from the service provider, and this exchange is prone to the same kinds of errors as mentioned above. For example, if the agreement is that the property owner carries out the actual billing, he needs to receive information about the distribution for all tenants, insert this information into his management systems, and establish the individual bills.

Beside the above, the large amount of data, which often includes sensitive personal data such as names, addresses, and possibly even social security IDs, bank account numbers, etc., that has to be exchanged between the real estate owner or manager and the sub-metering service provider, and the handling of data in each end, in particular at the sub-metering service provider who typically handles and exchanges data with several different property owners, also raises a concern about data protection, which is becoming a more and more regulated area. The risk of exposing sensitive personal data to non-authorised staff or external persons is great in many current business schemes due both to the communication methods and to the often little controlled way data are handled in either end.

Current political approaches e.g. for motivating consumers to reduce energy consumption include a requirement for specified billing a lot more often than once a year, e.g. once a month. Frequent recording of heat consumption would also enable heat prices to vary over time, possibly even through a day, in accordance with supply, demand, and political requirements. However, as can readily be understood, more frequent recording and billing, e.g. 12 times a year or even more instead of once, multiplies all risks and disadvantages mentioned above significantly, and drastically increases the manual workload in each end related to the exchange and validation of data.

### Summary of the invention

The inventor has identified the above-mentioned problems regarding how to improve the collaboration between property owner or manager and heat sub-metering service provider, comprising how to more reliably and conveniently exchange data including reducing manual handling and thereby human errors, preferably also facilitating automatic data validation and improved data protection, and the inventor has conceived the present invention, which relates to a data integration system, a heat sub-metering service provider data system, a data integration method and a computer program product according to the claims.

The systems and methods are as described below, however with the roles of the heat sub-metering service provider data system and the real estate administrator data system reversed such that the heat sub-metering service provider implements a request generator and a response handler, and the real estate administrator implements a request handler and response generator: A data integration system (DIS) for integration of data from a heat sub-metering service provider data system (SP) and a real estate administrator data system (RA), the data integration system (DIS) comprising
a real estate administrator database (RADB) associated with the real estate administrator data system (RA); the real estate administrator database (RADB) at least comprising real estate administrator owned data (RAD) associated with real estate administrator data identifiers (RADI);
a real estate administrator request gateway (RAGW) associated with the real estate administrator data system (RA);
a request generator (RG) associated with the real estate administrator data system (RA); the request generator (RG) being arranged to be able to generate a request (R) and submit the request through the real estate administrator request gateway (RAGW);
a heat sub-metering service provider database (SPDB) associated with the heat sub-metering service provider data system (SP); the heat sub-metering service provider database (SPDB) at least comprising heat sub-metering service provider owned data (SPD) associated with heat sub-metering service provider data identifiers (SPDI);
a heat sub-metering service provider request gateway (SPGW) associated with the heat sub-metering service provider data system (SP); and
a request handler (RH) associated with the heat sub-metering service provider data system (SP); the request handler (RH) being arranged to be able to handle the request (R) received through the heat sub-metering service provider request gateway (SPGW);
wherein the real estate administrator request gateway (RAGW) and the heat sub-metering service provider request gateway (SPGW) are arranged to enable a connection (C) to be established between them for transfer of the request (R); and
wherein the request (R) is one or more of at least
a data pull request (PLR) comprising a request (R) for the heat sub-metering service provider data system (SP) to provide a subset of the heat sub-metering service provider owned data (SPD) to the real estate administrator data system (RA); and
a data push request (PSR) comprising a request (R) for the heat sub-metering service provider data system (SP) to receive a subset of the real estate administrator owned data (RAD) from the real estate administrator data system (RA).

By the present invention is provided an advantageous data integration system for heat sub-metering service providers and real estate administrator which enables automatic data exchange between their data systems by allowing real estate administrator data systems to pull and push e.g. heat cost allocation related data from and to the heat sub-metering service provider data system. Thereby is facilitated that data from either system that may be relevant for both systems can always be synchronized.

According to the present invention the real estate administrator may be anyone managing a real estate property including a property owner, an owner's representative or administrator, a real estate administration company, a landlord, a caretaker, etc. In other words, the real estate administrator according to the present invention is the entity that maintains information about the tenants, renters, users, etc. amongst who the utility costs for the property are to be allocated. The property may be any real estate property or group of properties with several users, e.g. an apartment complex, a block of flats, a rented house, a house with several rooms with different renters, a building comprising shops, stores or outlets, possibly combined with flats, etc.

The heat sub-metering service provider may according to the present invention be any entity acting as a service provider for the real estate administrator with regard to gathering absolute or relative consumption of heat or water, e.g. data from room heaters or cold water meters, by the users of a property, and use the gathered data to provide a heating or water cost allocation, a basis for calculating such cost allocation or a final bill for heating or water. It is noted that the gathering of data may include the heat sub-metering service provider making the readings of measurement devices themselves, or they may receive the readings from the users, the property administrator, a caretaker or a utility company, and just gather the readings in the heat sub-metering service provider database for use in the cost allocation. Often the arrangement between the heat sub-metering service provider SP and a real estate administrator RA involves further services, e.g. alerts or advice which the heat sub-metering service provider may be able to deduce from the pool of data gathered by them from different sources. To the extent that data, information or alerts related to such further services are appropriate for being exchanged by means of a data integration system DIS according to the present invention, such use is within the scope of the present invention. For example this is highly relevant with respect to the exchange of alerts or warnings regarding e.g. consumers' use of their utility systems, possible faults or manipulation in consumption units, etc.

A heat sub-metering service provider typically serves several real estate administrators, each managing different properties. Hence, the data integration system of the present invention preferably facilitates storing data regarding several properties with different owners and/or administrators in the heat sub-metering service provider data base and having several real estate administrator data systems sending requests to the heat sub-metering service provider data system. In a preferred embodiment of the present invention, the heat sub-metering service provider data system associates the data of properties with requests from the related real estate administrator by means of real estate administrator identifiers, and requires a request from a real estate administrator to identify the requester, preferably in a reliable way with reduced risk of falsifying e.g. by means of password, digital signature, etc.

One major advantage of the data integration system of the present invention is the possibility to significantly reduce manual data handling. In fact, as the data exchange is handled by systems in accordance with agreed protocols including maintenance of data identifiers, the data exchange can run in the background with essentially no supervision, except when data validation fails and possibly requires human interaction to synchronize the systems. In an advanced embodiment of the invention, even most data validation errors can be handled by the systems, and human interaction is only necessary in severe cases of data mismatch.

By reducing the requirements for human handling, the data integration system of the present invention thereby enables increasing the frequency of meter reading, cost allocation calculation and consumer billing in accordance with the currently suggested several times a year, but also even increasing the frequency to several times a month or in certain configurations even several times a day is enabled by the present invention. As mentioned above, increased frequency of specified cost allocation would require extensive increase in human handling in the prior art data systems currently in use by heat sub-metering service providers, and beyond a certain frequency, it would simply be impossible.

The automatic data exchange enabled by the data integration system of the present invention also reduces the risk or errors being introduced during the copying of data from one system to the other. Unlike the prior art data systems as described above, the present invention does not require human interaction, e.g. human-controlled selection, conversion or entry of data. Hence, the number of steps or stations that data go through from one system to the other is reduced by the present invention, and the risk of humans introducing an error in any of the steps may be completely removed in certain embodiments of the present invention.

As the data exchange may run in the background without requiring human interaction, the real estate administrator data system may initiate data exchange at any time. This is a great advantage of the present invention, as it allows for updating data as soon as a change or new entry is known by the real estate administrator data system, or as often as the real estate administrator data system is configured to refresh data or poll for new data to be pulled from the heat sub-metering service provider. An advantageous aspect of this property of near real time or continuous data exchange of the present invention also means that the real estate administrator may send data to the heat sub-metering service provider piece by piece as the information or updates get ready. In other words, where the bunch of data to be used for a task at the heat sub-metering service provider, e.g. calculating the year's cost allocation, in prior art systems is typically collected at the real estate administrator and sent to the service provider in a single batch when approaching the deadline for the calculation, or split up in a few batches through the year, the data integration system of the present invention allows for new or changed data to be exchanged when it occurs. This enables the heat sub-metering service provider data system to be up-to-date at all times, and to discover data errors or mismatches shortly after the data is changed where the possibility of recovering data or identifying an error source is much higher than if not attended to for e.g. several months.

An advantage of the data integration system of the present invention is that data security and protection of personal information is much easier to accomplish, even to a much higher degree than with prior art systems. As no human interaction is needed for the data exchange, there is no need or risk for a staff member to browse through the data or accidentally see some of the data that is exchanged. This significantly reduces the number of staff persons who need to be allowed to handle the sensitive information as such staff persons will typically only be involved when manual error handling is needed. The risk of sensitive data ending up at a wrong place due to e.g. wrong email recipient or careless handling of the export/import files in a prior art system is also practically removed by the two data systems being in direct contact with each other, preferably by means of an encrypted connection which also prevents unauthorized tapping of the data being transmitted.

The present invention is further advantageous by allowing the real estate administrator data system to both pull and push data. Thereby the real estate administrator data system has the full initiative and can get or put data at any time, and does in a preferred embodiment not need to maintain a listening port for receiving any data at the service provider's initiative, though an embodiment comprising such feature is within the scope of the present invention, e.g. for receiving critical warnings. In a preferred embodiment, provided that the agreement between the real estate administrator and the heat sub-metering service provider involves an alert service related to e.g. leak detectors, smoke detectors, maintenance of measurement devices, etc., the real estate administrator data system preferably submits an alert pull request several times a day, preferably e.g. every 5 to 30 minutes, in order for the heat sub-metering service provider to be able to respond with any alerts. In a preferred embodiment where no alert service is part of the system, pull requests for alerts, errors or advice may be submitted once a day or even more rarely to obtain any information that the heat sub-metering service provider data system has prepared for the real estate administrator data system. Alternatively, a different way of pushing severe alerts from the heat sub-metering service provider data system to the real estate administrator data system unrequested may be implemented, e.g. by allowing for a push-request that way.

It is noted, that according to the present invention, the data pull request comprises a request for heat sub-metering service provider owned data, and the data push request comprises real estate administrator owned data. In a preferred embodiment of the present invention, the requests (and responses) may further comprise other data that are owned, maintained or gathered by the other party or third parties. According to the present invention the term owned when used about data is referring to being responsible for the maintenance of the data and holding of the master version of the data, and is not necessarily referring to legal ownership. Hence, in a typical data integration system according to the present invention, the real estate administrator owned data may e.g. comprise information about buildings, rental units and users, whereas the heat sub-metering service provider owned data may e.g. comprise readings from the measuring devices in the rental units as well as cost allocation calculation results.

It is noted, that according to the present invention it is preferred to have the heat sub-metering service provider data system serve the real estate administrator data system, thus assigning all initiative for data exchange to the real estate administrator, but applying the obligations of being reliable, substantially always online, etc., to the service provider data system. This relationship is particularly relevant when the heat sub-metering service provider is serving several real estate administrators, which may even have very differing IT systems, including very different scale and reliability. It is also very relevant when considering that the heat sub-metering service provider data system acts as a hub between real estate administrator data systems and the measuring devices located in the buildings that are managed by the real estate administrators. In that regard it is noted, that the heat sub-metering service provider is typically more physically connected to the buildings by means of connections from the hardware measuring devices than the real estate administrators who of course has a higher degree of legal connection to the managed buildings but in terms of communication mostly communicates with their properties by mouth or letters to caretakers or tenants. However, the roles of the heat sub-metering service provider data system and the real estate administrator data system could be reversed such that the heat sub-metering service provider implements a request generator and a response handler, and the real estate administrator implements a request handler and response generator. This alternative setup could possibly make sense in some arrangements, in particular if a big real estate administrator company anyway maintains a huge, reliable, always on, data system, whereas the selected service provider is a small company with a diminutive data system and resources. In yet an alternative embodiment the real estate administrator data system has the initiative to send push and pull requests as described, but the heat sub-metering service provider also has at least a push request generator to be able to send e.g. alerts or alarms immediately.

An advantageous embodiment of the invention is obtained when the data integration system further comprises
a response generator (RSG) associated with the heat sub-metering service provider data system (SP); the response generator (RSG) being arranged to be able to generate a response (RS) and submit the response through the heat sub-metering service provider request gateway (SPGW); and
a response handler (RSH) associated with the real estate administrator data system (RA); the response handler (RSH) being arranged to be able to handle the response (RS) received through the real estate administrator request gateway (RAGW).

An advantageous embodiment of the invention is obtained when the response (RS) is one or more of at least
a simple response indicating success or error related to said data push request (PSR) or error related to said data pull request (PLR);
a data response comprising said subset of the heat sub-metering service provider owned data (SPD) related to said data pull request (PLR).

In accordance with an embodiment of the present invention, the response may be used to submit specifically requested information, e.g. the result of cost allocation calculation for a specific building, but the responses may also be used for providing specific information selected by the heat sub-metering service provider data system in return of a non-specific request e.g. a request that generally inquires on any alerts, any updates, etc. The specific request is typically used according to the invention when the real estate administrator data system submits data to the service provider, or wants to retrieve data that should be ready, e.g. service provider master data or results with deadlines according to contract. The non-specific requests are typically used according to the invention at regular intervals, preferably quite frequently, in order to retrieve any data where the existence of the data or the time of their occurrence cannot be foreseen.

An advantageous embodiment of the invention is obtained when the data integration system comprises a system of data identifiers comprising heat sub-metering service provider data identifiers (SPDI) maintained by the heat sub-metering service provider data system (SP), real estate administrator data identifiers (RADI) maintained by the real estate administrator data system (RA) and foreign data identifiers (FDI), wherein the heat sub-metering service provider data system (SP) is arranged to reference real estate administrator owned data (RAD) at least partially by foreign data identifiers (FDI) corresponding to real estate administrator data identifiers (RADI) and wherein the real estate administrator data system (RA) is arranged to reference heat sub-metering service provider data (SPD) at least partially by foreign data identifiers (FDI) corresponding to heat sub-metering service provider data identifiers (SPDI).

The system of data identifiers of the present invention is very advantageous as it allows for both the heat sub-metering service provider data system and the real estate administrator data system to operate on the same data identifiers or corresponding data identifiers automatically without needing to convert or map data to another identifier system. Hence, according to the present invention the data owner of some particular data establishes the relevant data identifiers or primary keys, and the opposite data system when receiving the particular data or a subset thereof establishes foreign data identifiers that correspond to the primary keys denoted by the data owner. Then both system can refer to the particular data by corresponding data identifiers directly and automatically.

An advantageous embodiment of the invention is obtained when the request (R) can further be a data identifier maintenance request (DIMR) comprising a request (R) for the heat sub-metering service provider data system (SP) to update a foreign data identifier (FDI) in the heat sub-metering service provider database (SPDB), the foreign data identifier (FDI) corresponding to one of the real estate administrator data identifiers (RADI) associated with real estate administrator owned data (RAD).

By allowing for a data identifier maintenance request an advantageous way of enabling maintenance and synchronization between the data systems with regard to keys is obtained. It is noted that update of a foreign data identifier according to the present invention preferably also involves creation of the foreign data identifier if it does not exist already, as well as deletion of a foreign data identifier referring to data that have been removed from the relevant data owner's database.

An advantageous embodiment of the invention is obtained when the subset of real estate administrator owned data (RAD) comprised by the data push request (PSR) is referenced by one or more real estate administrator data identifiers (RADI) having corresponding foreign data identifiers (FDI) in the heat sub-metering service provider database (SPDB).

An advantageous embodiment of the invention is obtained when the subset of heat sub-metering service provider owned data (SPD) comprised by the data pull request (PLR) is referenced by one or more foreign data identifiers (FDI) having corresponding heat sub-metering service provider data identifiers (SPDI) in the heat sub-metering service provider database (SPDB).

An advantageous embodiment of the invention is obtained when the heat sub-metering service provider data system (SP) is arranged to be able to receive sub-meter readings (SMR) from a number of measuring devices (M) located in properties (B) which are at least partially managed by the real estate administrator data system (RA).

In accordance with the present invention, the heat sub-metering service provider data system preferably receives readings from within the buildings managed by the real estate administrator data system. The readings may comprise absolute or relative, graduated meter readings as well as binary flags, or combinations thereof, and may be made manually by observation, or by intelligent measuring devices capable of transmitting their values automatically, e.g. by computer network or radio connectivity. In a preferred embodiment of the present invention the heat sub-metering service provider is responsible for making the readings, but arrangements where the users, caretakers, property administrators or owners make the readings and submit them to the heat sub-metering service provider are within the scope of the invention.

In a preferred embodiment the readings made or received by the heat sub-metering service provider are primarily sub-meter readings related to e.g. heating consumption in the different consumption units in the properties, but may secondly relate to other types of measuring devices, e.g. humidity sensors, leak detectors, smoke detectors, etc.

An advantageous embodiment of the invention is obtained when several groups (G1 - G3) of properties (B; B1 - B7) are associated with different real estate administrator data systems (RA; RA1 - RA3) each being associated with a real estate administrator identifier; and wherein the heat sub-metering service provider data system (SP) is arranged to be able to receive sub-meter readings (SMR) from a number of measuring devices (M) located in two or more of the several groups of the properties.

In a typical arrangement the heat sub-metering service provider is handling measuring device readings from several properties having different real estate administrators. The heat sub-metering service provider preferably according to the present invention groups the properties according to the associated real estate administrator by means of a real estate administrator identifier, e.g. a customer number. In a preferred embodiment the readings made or received by the heat sub-metering service provider are primarily sub-meter readings related to e.g. heating consumption in the different consumption units in the properties, but may secondly relate to other types of measuring devices, e.g. humidity sensors, leak detectors, smoke detectors, etc.

An advantageous embodiment of the invention is obtained when different real estate administrator data systems (RA; RA1 - RA3) are associated with different real estate administrator identifiers; and wherein the heat sub-metering service provider data system (SP) is arranged to filter the subset of the heat sub-metering service provider owned data (SPD) requested by the data pull request (PLR) so that it only comprises heat sub-metering service provider owned data (SPD) associated with a group (G1 - G3) of properties (B; B1 - B7) associated with a real estate administrator data system (RA; RA1 - RA3) which is identified in the data pull request (PLR) by an identifier corresponding to the real estate administrator identifier.

Being able to ensure that no real estate administrator receives data related to properties he is not managing is an advantageous feature of this preferred embodiment of the present invention. The reliability of this feature is much higher in the data integration system of the present invention where all data exchange is carried out automatically by systems, as it is in the prior art systems where human errors may cause data from one group of properties to end up at the wrong real estate administrator, or mix-up of data from properties associated with different real estate administrators.

An advantageous embodiment of the invention is obtained when wherein the measuring devices (M) comprise consumption meters.

An advantageous embodiment of the invention is obtained when the consumption meters comprise heat cost allocation meters.

A heat cost allocation meter may for instance refer to the relative consumption measuring devices often mounted on heaters in e.g. apartments, which are used to compare the relative consumption by different renters within the same building.

An advantageous embodiment of the invention is obtained when the consumption meters comprise water meters and/or energy meters.

The water meters may refer to any kind of water meters, e.g. cold water meters, hot utility water meters, heating water meters, etc. Energy meters may also be used for measuring the relative consumption of e.g. heating water.

An advantageous embodiment of the invention is obtained when the measuring devices (M) comprise hygrometers, humidity sensors, leak detectors and/or fire or smoke detectors.

In an advantageous embodiment of the present invention, the heat sub-metering service provider may be able to improve heating advice or warning, or offer alert services relating to bad heading habits, water leaks, smoke occurrences, etc., based on information from e.g. these types of detectors. In particular in a configuration where the heat sub-metering service provider establishes and maintains a system for automatic reading of consumption meters, e.g. by means of a radio network in the associated buildings, the extension of the system with further kinds of detectors and alert types is relatively easy and inexpensive, and thus becomes very advantageous. Maintaining and using such added information in a data integration system according to the present invention is even more advantageous, as the automatic data exchange in preferably near real time, allows for automatic, reliable alerting at all times without the need for human watching and interaction.

An advantageous embodiment of the invention is obtained when the heat sub-metering service provider data system (SP) is further arranged to be able to receive main meter readings (MMR), specifications and/or cost totals from a utility company (U) which is associated to one or more of said properties (B) by being one of their utility providers.

In a typical arrangement, the heat sub-metering service provider receives information about the totals to be allocated for a property from the real estate administrator, but it is within the scope of the present invention to receive some information directly from the relevant utility company or other data sources.

An advantageous embodiment of the invention is obtained when the heat sub-metering service provider data system (SP) is arranged to be able to calculate a cost allocation of utility expenses among consumers (CM) associated with consumption units (CU) associated with properties (B) at least partially managed by said real estate administrator data system (RA) where the heat sub-metering service provider owned data (SPD) comprises sub-meter readings (SMR) received from a number of measuring devices (M) located in the properties (B).

Consumers CM according to the present invention refer to the renters, tenants, users, occupants, residents, lodgers, etc. who consumes e.g. heating or water in the consumption units, e.g. apartments, rooms, flats, houses or shops, etc., and who have the responsibility, typically by way of a rental contract, to pay for the utility consumption in that consumption unit and possibly a relative part of the expenses for any common areas in the building.

An advantageous embodiment of the invention is obtained when the subset of heat sub-metering service provider owned data (SPD) requested by means of the data pull request (PLR) is arranged to facilitate the real estate administrator data system (RA) to produce bills, cash collection or prepayment forecasts for consumers (CM) associated with consumption units (CU) associated with properties (B) at least partially managed by said real estate administrator data system (RA), said consumption units (CU) comprising measuring devices (M) associated with said heat sub-metering service provider data system (SP).

The heat sub-metering service provider typically provides data that facilitates the real administrator data system to produce the bills according to an agreement on how the data should be provided, and the degree of work that remains for the real estate administrator to finish and send the bills. According to the present invention, any degree of completeness is within the scope of the present invention, as the subset of heat sub-metering service provider data facilitating the production of bills may comprise anything from raw cost allocation percentages to be processed with the total expense amounts, over final processed amounts of money to be paid for the individual renters that only need to be formatted properly for a bill, to completely finished bills that only need printing and franking.

Besides final bills based on cost allocation, the heat sub-metering service provider may also provide services for e.g. collecting the prepayments from consumers or providing prepayment forecasts to the real estate administrator. When the heat sub-metering service provider is hired to collect prepayments from consumers, the data exchange system of the present invention may be used for the real estate administrator to subscribe or unsubscribe consumers to this service, and for the heat sub-metering service provider to inform the real estate administrator of regular or irregular payments, etc. Prepayment forecasts may be provided by the heat sub-metering service provider through a data exchange system according to the present invention for assisting the real estate administrator in determining proper amounts for prepayments between billings in order to level the costs out over the billing period as precisely as possible. The prepayment forecasts may e.g. be based on previous and current consumption amounts, fluctuations in e.g. heating costs, weather predictions, etc.

An advantageous embodiment of the invention is obtained when the subset of heat sub-metering service provider owned data (SPD) requested by means of the data pull request (PLR) is arranged to facilitate the real estate administrator data system (RA) to discover errors, faults, leaks, manipulation and/or attempts at fraud in consumption units (CU) associated with properties (B) at least partially managed by said real estate administrator data system (RA), said consumption units (CU) comprising measuring devices (M) associated with said heat sub-metering service provider data system (SP).

Because of the automated data exchange according to the present invention, making it practical for the heat sub-metering service provider to receive data when they are changed or occur, and because the heat sub-metering service provider also receives data such as sub-meter readings, humidity sensor values, leak detection warnings, etc., from the consumption units and properties by means of the measuring devices, the heat sub-metering service provider is in a preferred embodiment of the present invention enabled to analyze the data, either by simply discovering a warning or improbable reading, by comparing or correlating data from a measuring device over time, or by combining and e.g. correlating data from different measuring devices. The results may e.g. directly lead to a conclusion or in other cases just to indications, that can be provided to the real estate administrator data system, thereby facilitating the real estate administrator to act on a warning, or further consider or investigate indications to confirm whether an irregularity exist.

In an embodiment of the present invention a critical warning or alarm may be provided to the real estate administrator by other means than a response to a request according to the present invention, e.g. if no request is received from the relevant real estate administrator within a reasonable time relative to the severity of the warning. In an embodiment of the present invention, a protocol for the format of a response to a request according to the present invention allows for always adding a warning or alert to a response regardless of the subject of request. This may e.g. be implemented by an optional XML-section in the SOAP responses e.g. named "alert" and a corresponding implementation in the response handler in the real estate administrator data system to always be able to handle an alert section in a response to any request. In a preferred embodiment of the invention, the real estate administrator requests alert-responses regularly and sufficiently frequently to receive all warnings or alerts within reasonable time for their occurrence at the service provider, e.g. by requesting alerts every 1, 5, 10 or 30 minutes depending on the kinds of alerts implemented in their systems.

An advantageous embodiment of the invention is obtained when the subset of heat sub-metering service provider owned data (SPD) requested by means of the data pull request (PLR) is arranged to facilitate the real estate administrator data system (RA) to discover inefficient consumption in consumption units (CU) associated with properties (B) at least partially managed by said real estate administrator data system (RA), said consumption units (CU) comprising measuring devices (M) associated with said heat sub-metering service provider data system (SP).

An advantageous embodiment of the invention is obtained when the subset of heat sub-metering service provider owned data (SPD) requested by means of the data pull request (PLR) is arranged to facilitate the real estate administrator data system (RA) to facilitate energy management, providing overview of consumption and/or advice on consumption to consumers (CM) associated with consumption units (CU) associated with properties (B) at least partially managed by said real estate administrator data system (RA), said consumption units (CU) comprising measuring devices (M) associated with said heat sub-metering service provider data system (SP).

As described above, the heat sub-metering service provider may deduce additional information from all its data e.g. by comparing or correlating data from different sources. One possible result of monitoring the sub-meter readings from a consumption unit, e.g. an apartment, could be a conclusion that the heating system in an apartment or building is not working correctly, or e.g. that the relevant user is probably not using the heating systems efficiently, e.g. because he only uses one out of several possible heaters, because the meter readings suggest that he tends to keep heating on while having windows open, etc. According to an embodiment of the invention the heat sub-metering service provider data system may analyze this automatically, and provide the indications to the real estate administrator for further action, e.g. to send a caretaker or plumber to investigate the heating system, to educate the tenant, or to find out that the irregularity can be reasonably explained. As with the bills, the heat sub-metering service provider data system may provide the alerts, information or analysis results described above in more or less completed form, e.g. as an energy consumption overview and advice for a particular tenant ready for emailing or printing and sending.

An advantageous embodiment of the invention is obtained when the request (R) is handled by the heat sub-metering service provider data system (SP) automatically.

The feature of the present invention that not human interaction is required for handling the pull and push requests from the real estate administrator data system is very advantageous over the prior art systems.

An advantageous embodiment of the invention is obtained when the heat sub-metering service provider request gateway (SPGW) and the request handler (RH) are arranged to be able to receive and process requests (R) substantially day and night, thus making the data integration system a real-time processing system.

When the data integration system according to an embodiment of the invention facilitates exchanging data in near real time, i.e. as data changes occur or data are required or wanted, it facilitates piecemeal exchange of data which allows for immediate data validation and correction, immediate reaction if data indicates that something is wrong, and always up-to-date data at both ends as far as the data common in both data systems goes. In other words the data from both parties are integrated to what resembles a common database, also preferably supported by common data identifiers as described above. This is a huge advantage over prior art systems, where data are gathered for very infrequent or seldom batch updates, and each database therefore is unreliable at best and directly misleading at worst during the long periods with no updates.

In an alternative embodiment of the present invention the requests and responses are still generated and handled automatically, but at somewhat less frequent intervals, e.g. once a week or once a month. Though reducing the real-time advantages, this alternative embodiment is also advantageous over prior art systems as it works automatically and independently of human interaction.

An advantageous embodiment of the invention is obtained when the real estate administrator request gateway (RAGW) and the request generator (RG) are arranged to be able to generate and submit requests (R) substantially directly after occurrence of an event that makes data exchange appropriate, the event comprising e.g. change of certain real estate administrator owned data (RAD) in the real estate administrator database (RADB), expiry of a long-term deadline associated with request of certain data such as cost allocation or final billing, or expiry of a short-term deadline associated with frequent request of certain data such as surveillance or monitoring statuses, discovered errors, etc.

In a preferred embodiment of the present invention the real estate administrator data system initiates data exchange by submitting requests when real estate administrator owned data that are also relevant to the heat sub-metering service provider are changed, when a long-term deadline typically set as a date at the real estate administrator data system expires, e.g. a deadline for requesting the month's cost allocation calculations or consumer bills, and when a short-term deadline typically set by an amount of minutes or other time interval expires, e.g. a deadline for requesting any new alerts, warnings, etc.

An advantageous embodiment of the invention is obtained when the heat sub-metering service provider data system (SP) is arranged to perform data analysis on the subset of the real estate administrator owned data (RAD) received with the data push request (PSR).

An advantageous embodiment of the invention is obtained when the heat sub-metering service provider data system (SP) is arranged to detect irregularities in the subset of the real estate administrator owned data (RAD) received with the data push request (PSR).

As explained above, an advantage of the present invention is related to this embodiment where the heat sub-metering service provider data system automatically analyses incoming data. A main object of this analysis is simply to discover data errors, e.g. data that are clearly faulty, e.g. by comprising erroneous data identifiers, empty data, values out of bounds, etc. Advantages of this analysis comprise that errors can be found immediately and a correction requested by means of a response according to the present invention or by directing the question to a staff person - in most cases the error will be present in the real estate administrator data system, too, as the data exchange itself is unlikely to introduce errors. Further objects of data analysis in embodiments of the present invention with additional advantages comprise e.g. comparison with other data maintained by the heat sub-metering service provider in order to deduce information that may show faults, errors, manipulation or inefficiency in the related utility systems.

An advantageous embodiment of the invention is obtained when the heat sub-metering service provider data system (SP) is arranged to prepare a response (RS) comprising a warning or alert upon detection of irregularities in the subset of the real estate administrator owned data (RAD) received with the data push request (PSR).

When a warning, alert or advice, etc. is found appropriate by analysis of data submitted by the real estate administrator data system, the heat sub-metering service provider data system may advantageously prepare a corresponding response. In a preferred embodiment the heat sub-metering service provider data system performs the data analysis immediately after receipt of data so that the alert etc. may be included in the response sent as a receipt for the data. If the analysis cannot be concluded in a reasonable time or if the alert condition etc. is not evident until correlation with other data, possible received subsequently or from other sources, the response can be prepared and put on an alert queue for immediate response to a request for any alerts etc.

An advantageous embodiment of the invention is obtained when the heat sub-metering service provider data system (SP) is arranged to prepare a response (RS) comprising a warning or alert upon detection of irregularities or error or warning readings in sub-meter readings (SMR) received from measuring devices (M) associated with properties (B) at least partially managed by the real estate administrator data system (RA).

An advantageous embodiment of the invention is obtained when the heat sub-metering service provider data system (SP) is arranged to at least partially prepare a response (RS) upon detection of data irregularities or receipt of errors, warnings or alarms; the heat sub-metering service provider data system (SP) comprising a storage for storing the prepared response; and wherein a request (R) can be a data pull request (PLR) for requesting the heat sub-metering service provider data system (SP) to provide the stored prepared response or provide information about stored prepared responses.

An advantageous embodiment of the invention is obtained when the data integration system is arranged to automatically and frequently generate and submit a data pull request (PLR) comprising a request to receive a response (RS) corresponding to an at least partially prepared response from the heat sub-metering service provider data system (SP), e.g. comprising errors, alerts, warnings or alarms.

In a preferred embodiment of the present invention the real estate administrator data system requests alerts etc. at intervals set according to the possible severity of the alerts that are agreed between the parties. If for example the real estate administrator subscribes for smoke or leak warnings the requests for new alerts should be made very frequently, e.g. every minute or every 5 minutes, whereas a service agreement involving e.g. only cost allocation, energy consumption advices and alerts when inefficient heating is suspected may be reasonably implemented by requests for alerts e.g. once a week. In an alternative embodiment an additional communication way is established, e.g. allowing the heat sub-metering service provider to push severe alerts unasked. In this embodiment the requests for less severe alerts may then be reduced in frequency.

An advantageous embodiment of the invention is obtained when the heat sub-metering service provider owned data (SPD) comprises one or more of
consumption sub-meter (M) related data;
consumption sub-meter reading (SMR) related data;
relative or absolute heat consumption sub-meter related data;
hot or cold water sub-meter reading related data;
humidity, leak or smoke detector related data;
cost allocation related data; or
billing related data.

According to an embodiment of the present invention, the sub-meter and detector related data may e.g. comprise data about the serial number, type and location of a the sub-meters and detectors, whereas the reading related data e.g. comprise current meter values or warning flags.

An advantageous embodiment of the invention is obtained when the real estate administrator owned data (RAD) comprises one or more of
consumer (CM) related data;
consumption unit (CU) related data;
property (B) related data;
on account payment related data; or
utility expense related data.

According to an embodiment of the present invention, the consumer related data may comprise name and contact address of a consumer, the consumer being the person or entity to bill for consumption in the related consumption unit, e.g. an apartment, room or shop, the data of which e.g. comprising address, size, number of rooms, number of heaters, water taps, etc. Property related data may e.g. comprise information about address, number of comprised rental units / consumption units and common areas, types of utility installed, etc. On account payment related data may comprise information about prepayments that are charged by the real estate administrator to level out the utility expenses over the year and which should of course be included in final billing based on the cost allocation calculation, and in when renters move out. Utility expense related data may e.g. comprise billing amounts from a utility company indicating the total utility expenses for a property, which should be distributed among the renters by the cost allocation.

An advantageous embodiment of the invention is obtained when the real estate administrator data identifiers (RADI) comprise one or more of
consumer (CM) keys;
consumption unit (CU) keys; or
property (B) keys.

The above-mentioned real estate administrator data identifiers are keys that are very advantageous to maintain as foreign data identifiers in the heat sub-metering service provider data system as a lot of data identified by these keys are relevant to include in both data systems.

An advantageous embodiment of the invention is obtained when said data pull request (PLR) comprises a request for data related to one or more of
measuring devices (M);
consumption sub-meters (M);
consumption sub-meter reading values (SMR);
device alarms;
calculated cost allocation;
final consumer billing;
   - cash collection;
   - prepayment forecasts;
alerts regarding failure, error or fraud discovered by the heat sub-metering service provider data system (SP);
status related to the heat sub-metering service provider data system (SP) or services provided by a heat sub-metering service provider; or
surveillance of devices (M) and systems maintained or monitored by the heat sub-metering service provider.

An advantageous embodiment of the invention is obtained when said data push request (PSR) comprises data related to one or more of
properties (B);
consumption units (CU);
consumers (CM);
moving of consumers (CM);
on account payments or prepayments; or
utility expenses.

An advantageous embodiment of the invention is obtained when the heat sub-metering service provider request gateway (SPGW) and request handler (RH) are arranged to form a web service.

An advantageous embodiment of the invention is obtained when the connection (C) is established by means of the Internet (N).

An advantageous embodiment of the invention is obtained when the connection (C) and/or the data comprised by a request (R) or response (RS) is encrypted.

An advantageous embodiment of the invention is obtained when the connection (C) is established by means of a Virtual Private Network channel, or a connection encrypted by Transport Layer Security or Secure Socket Layers.

An advantageous embodiment of the invention is obtained when the request (R) comprises an XML message, preferably a SOAP message.

An advantageous embodiment of the invention is obtained when said subset of the heat sub-metering service provider owned data (SPD) in response to a data pull request (PLR) is provided to the real estate administrator data system (RA) in the form of an XML message, preferably a SOAP message.

An advantageous embodiment of the invention is obtained when the data integration system further comprises
a first data storage for storing said heat sub-metering service provider database (SPDB) and a second data storage for storing said real estate administrator database (RADB); a first processing unit and first memory unit for implementing the request handler (RH) and a second processing unit and second memory unit for implementing the request generator (RG); and
a first network interface for facilitating the heat sub-metering service provider request gateway (SPGW) and a second network interface for facilitating the real estate administrator request gateway (RAGW).

An advantageous embodiment of the invention is obtained when the data integration system further comprises a transaction log (TL) associated with the heat sub-metering service provider data system (SP) arranged to log at least a subset of said requests (R).

This preferred embodiment is very advantageous as it allows for investigating unexplained errors by considering the log. This may be used for legal purposes and system correcting purposes in deciding which data system introduced a certain possibly erroneous data subset and how the request looked exactly. The logging, in particular when combined with logging of responses and receipts from the counterpart for received data according to a preferred embodiment of the invention, may also advantageously be used for documenting that contractual obligations have been performed, e.g. timely submission of cost allocation calculation or immediate submission of appropriate alerts.

The present invention further relates to a heat sub-metering service provider data system (SP) comprising
a heat sub-metering service provider database (SPDB) at least comprising heat sub-metering service provider owned data (SPD) associated with heat sub-metering service provider data identifiers (SPDI);
a heat sub-metering service provider request gateway (SPGW) arranged to enable establishment of a connection (C) from a real estate administrator request gateway (RAGW) associated with a real estate administrator data system (RA) for transfer of a request (R); and
a request handler (RH) arranged to be able to handle the request (R) received through the heat sub-metering service provider request gateway (SPGW);
wherein the request (R) is one or more of at least
a data pull request (PLR) comprising a request (R) for the heat sub-metering service provider data system (SP) to provide a subset of the heat sub-metering service provider owned data (SPD) to the real estate administrator data system (RA);
a data push request (PSR) comprising a request (R) for the heat sub-metering service provider data system (SP) to receive a subset of real estate administrator owned data (RAD) from the real estate administrator data system (RA).

By the present invention is provided an advantageous data system for heat sub-metering service providers which enables automatic data exchange between with real estate administrator data systems by allowing real estate administrator data systems to pull and push e.g. heat cost allocation related data from and to the heat sub-metering service provider data system. Thereby is facilitated that data from either system that may be relevant for both systems can always be synchronized.

The advantages, further features and particularities described above for any embodiment of the heat sub-metering service provider data system within the data integration system DIS also apply to the heat sub-metering service provider data system of the present embodiment in any combination.

An advantageous embodiment of the invention is obtained when the heat sub-metering service provider data system further comprises a response generator (RSG) arranged to be able to generate a response (RS) and submit the response through the heat sub-metering service provider request gateway (SPGW) to the real estate administrator data system (RA) via said connection (C).

An advantageous embodiment of the invention is obtained when the response (RS) is one or more of at least
a simple response indicating success or error related to said data push request (PSR) or error related to said data pull request (PLR);
a data response comprising said subset of the heat sub-metering service provider owned data (SPD) related to said data pull request (PLR).

An advantageous embodiment of the invention is obtained when the heat sub-metering service provider data system comprises a system of data identifiers comprising heat sub-metering service provider data identifiers (SPDI) maintained by the heat sub-metering service provider data system (SP) and foreign data identifiers (FDI), wherein the heat sub-metering service provider data system (SP) is arranged to reference real estate administrator owned data (RAD) at least partially by foreign data identifiers (FDI) corresponding to real estate administrator data identifiers (RADI) in the real estate administrator data system (RA).

An advantageous embodiment of the invention is obtained when the request (R) can further be a data identifier maintenance request (DIMR) comprising a request (R) for the heat sub-metering service provider data system (SP) to update a foreign data identifier (FDI) in the heat sub-metering service provider database (SPDB), the foreign data identifier (FDI) corresponding to a real estate administrator data identifier (RADI) associated with real estate administrator owned data (RAD).

An advantageous embodiment of the invention is obtained when the subset of real estate administrator owned data (RAD) comprised by the data push request (PSR) is referenced by one or more real estate administrator data identifiers (RADI) having corresponding foreign data identifiers (FDI) in the heat sub-metering service provider database (SPDB).

An advantageous embodiment of the invention is obtained when the subset of heat sub-metering service provider owned data (SPD) comprised by the data pull request (PLR) is referenced by one or more foreign data identifiers (FDI) having corresponding heat sub-metering service provider data identifiers (SPDI) in the heat sub-metering service provider database (SPDB).

An advantageous embodiment of the invention is obtained when the heat sub-metering service provider data system (SP) is arranged to be able to receive sub-meter readings (SMR) from a number of measuring devices (M) located in properties (B) which are at least partially managed by the real estate administrator data system (RA).

An advantageous embodiment of the invention is obtained when several groups (G1 - G3) of properties (B; B1 - B7) are associated with different real estate administrator data systems (RA; RA1 - RA3) each being associated with a real estate administrator identifier; and wherein the heat sub-metering service provider data system (SP) is arranged to be able to receive sub-meter readings (SMR) from a number of measuring devices (M) located in two or more of the several groups of the properties.

An advantageous embodiment of the invention is obtained when the heat sub-metering service provider data system (SP) is arranged to filter the subset of the heat sub-metering service provider owned data (SPD) requested by the data pull request (PLR) so that it only comprises heat sub-metering service provider owned data (SPD) associated with a group (G1 - G3) of properties (B; B1 - B7) associated with a real estate administrator data system (RA; RA1 - RA3) which is identified in the data pull request (PLR) by an identifier corresponding to a real estate administrator identifier from a list of different real estate administrator identifiers associated with different real estate administrator data systems (RA; RA1 - RA3).

An advantageous embodiment of the invention is obtained when the measuring devices (M) comprise consumption meters, heat cost allocation meters, water meters, energy meters, hygrometers, humidity sensors, leak detectors and/or fire or smoke detectors.

An advantageous embodiment of the invention is obtained when the heat sub-metering service provider data system is arranged to be able to receive main meter readings (MMR), specifications and/or cost totals from a utility company (U) which is associated to one or more of said properties (B) by being one of their utility providers.

An advantageous embodiment of the invention is obtained when the heat sub-metering service provider data system is arranged to be able to calculate a cost allocation of utility expenses among consumers (CM) associated with consumption units (CU) associated with properties (B) at least partially managed by said real estate administrator data system (RA) where the heat sub-metering service provider owned data (SPD) comprises sub-meter readings (SMR) received from a number of measuring devices (M) located in the properties (B).

An advantageous embodiment of the invention is obtained when the subset of heat sub-metering service provider owned data (SPD) requested by means of the data pull request (PLR) is arranged to facilitate the real estate administrator data system (RA) to produce bills, cash collection or prepayment forecasts for consumers (CM) associated with consumption units (CU) associated with properties (B) at least partially managed by said real estate administrator data system (RA), said consumption units (CU) comprising measuring devices (M) associated with said heat sub-metering service provider data system (SP).

An advantageous embodiment of the invention is obtained when the subset of heat sub-metering service provider owned data (SPD) requested by means of the data pull request (PLR) is arranged to facilitate the real estate administrator data system (RA) to discover errors, faults, leaks, manipulation and/or attempts at fraud in consumption units (CU) associated with properties (B) at least partially managed by said real estate administrator data system (RA), said consumption units (CU) comprising measuring devices (M) associated with said heat sub-metering service provider data system (SP).

An advantageous embodiment of the invention is obtained when the subset of heat sub-metering service provider owned data (SPD) requested by means of the data pull request (PLR) is arranged to facilitate the real estate administrator data system (RA) to discover inefficient consumption in consumption units (CU) associated with properties (B) at least partially managed by said real estate administrator data system (RA), said consumption units (CU) comprising measuring devices (M) associated with said heat sub-metering service provider data system (SP).

An advantageous embodiment of the invention is obtained when the subset of heat sub-metering service provider owned data (SPD) requested by means of the data pull request (PLR) is arranged to facilitate the real estate administrator data system (RA) to facilitate energy management, providing overview of consumption and/or advice on consumption to consumers (CM) associated with consumption units (CU) associated with properties (B) at least partially managed by said real estate administrator data system (RA), said consumption units (CU) comprising measuring devices (M) associated with said heat sub-metering service provider data system (SP).

An advantageous embodiment of the invention is obtained when the request (R) is handled by the heat sub-metering service provider data system (SP) automatically.

An advantageous embodiment of the invention is obtained when the heat sub-metering service provider request gateway (SPGW) and the request handler (RH) are arranged to be able to receive and process requests (R) substantially day and night, thus making the data integration system a real-time processing system.

An advantageous embodiment of the invention is obtained when the heat sub-metering service provider data system is arranged to perform data analysis and/or detect irregularities in the subset of the real estate administrator owned data (RAD) received with the data push request (PSR).

An advantageous embodiment of the invention is obtained when the heat sub-metering service provider data system is arranged to prepare a response (RS) comprising a warning or alert upon detection of irregularities in the subset of the real estate administrator owned data (RAD) received with the data push request (PSR).

An advantageous embodiment of the invention is obtained when the heat sub-metering service provider data system is arranged to prepare a response (RS) comprising a warning or alert upon detection of irregularities or error or warning readings in sub-meter readings (SMR) received from measuring devices (M) associated with properties (B) at least partially managed by the real estate administrator data system (RA).

An advantageous embodiment of the invention is obtained when the heat sub-metering service provider data system is arranged to at least partially prepare a response (RS) upon detection of data irregularities or receipt of errors, warnings or alarms; the heat sub-metering service provider data system (SP) comprising a storage for storing the prepared response; and wherein a request (R) can be a data pull request (PLR) for requesting the heat sub-metering service provider data system (SP) to provide the stored prepared response or provide information about stored prepared responses.

An advantageous embodiment of the invention is obtained when said data pull request (PLR) comprises a request for data related to one or more of
measuring devices (M);
consumption sub-meters (M);
consumption sub-meter reading values (SMR);
device alarms;
calculated cost allocation;
final consumer billing;
cash collection;
prepayment forecasts;
alerts regarding failure, error or fraud discovered by the heat sub-metering service provider data system (SP);
status related to the heat sub-metering service provider data system (SP) or services provided by a heat sub-metering service provider; or
surveillance of devices (M) and systems maintained or monitored by the heat sub-metering service provider.

An advantageous embodiment of the invention is obtained when said data push request (PSR) comprises data related to one or more of
properties (B);
consumption units (CU);
consumers (CM);
moving of consumers (CM);
on account payments or prepayments; or
utility expenses.

An advantageous embodiment of the invention is obtained when the heat sub-metering service provider request gateway (SPGW) and request handler (RH) are arranged to form a web service, and wherein the connection (C) is established by means of the Internet (N).

An advantageous embodiment of the invention is obtained when the connection (C) and/or the data comprised by a request (R) or response (RS) is encrypted, preferably by means of a Virtual Private Network channel, Transport Layer Security or Secure Socket Layers.

An advantageous embodiment of the invention is obtained when the request (R) comprises an XML message, preferably a SOAP message.

An advantageous embodiment of the invention is obtained when said subset of the heat sub-metering service provider owned data (SPD) in response to a data pull request (PLR) is provided to the real estate administrator data system (RA) in the form of an XML message, preferably a SOAP message.

An advantageous embodiment of the invention is obtained when the heat sub-metering service provider data system comprises a data storage for storing said heat sub-metering service provider database (SPDB), a processing unit and memory unit for implementing the request handler (RH), and a network interface for facilitating the heat sub-metering service provider request gateway (SPGW).

An advantageous embodiment of the invention is obtained when the heat sub-metering service provider data system further comprises a transaction log (TL) associated with the heat sub-metering service provider data system (SP) arranged to log at least a subset of said requests (R).

The present invention further relates to a real estate administrator data system (RA) comprising
a real estate administrator database (RADB) at least comprising real estate administrator owned data (RAD) associated with real estate administrator data identifiers (RADI);
a real estate administrator request gateway (RAGW) arranged to enable establishment of a connection (C) to a heat sub-metering service provider request gateway (SPGW) associated with a heat sub-metering service provider data system (SP) for transfer of a request (R); and
a request generator (RG) arranged to be able to generate a request (R) and submit the request through the real estate administrator request gateway (RAGW);
wherein the request (R) is one or more of at least
a data pull request (PLR) comprising a request (R) for the heat sub-metering service provider data system (SP) to provide a subset of heat sub-metering service provider owned data (SPD) to the real estate administrator data system (RA);
a data push request (PSR) comprising a request (R) for the heat sub-metering service provider data system (SP) to receive a subset of the real estate administrator owned data (RAD) from the real estate administrator data system (RA).

By the present invention is provided an advantageous data system for real estate administrator or property owner which enables automatic data exchange with a heat sub-metering service provider data system by allowing the real estate administrator data system to pull and push e.g. heat cost allocation related data from and to the heat sub-metering service provider data system. Thereby is facilitated that data from either system that may be relevant for both systems can always be synchronized.

The advantages, further features and particularities described above for any embodiment of the real estate administrator data system within the data integration system DIS also apply to the real estate administrator data system of the present embodiment in any combination.

An advantageous embodiment of the invention is obtained when the real estate administrator data system further comprises a response handler (RSH) arranged to be able to handle a response (RS) received from the heat sub-metering service provider data system (SP) through the real estate administrator request gateway (RAGW) via said connection (C).

An advantageous embodiment of the invention is obtained when the response (RS) is one or more of at least
a simple response indicating success or error related to said data push request (PSR) or error related to said data pull request (PLR);
a data response comprising said subset of the heat sub-metering service provider owned data (SPD) related to said data pull request (PLR).

An advantageous embodiment of the invention is obtained when the real estate administrator data system comprises a system of data identifiers comprising real estate administrator data identifiers (RADI) maintained by the real estate administrator data system (RA) and foreign data identifiers (FDI), wherein the real estate administrator data system (RA) is arranged to reference heat sub-metering service provider data (SPD) at least partially by foreign data identifiers (FDI) corresponding to heat sub-metering service provider data identifiers (SPDI) in the heat sub-metering service provider data system (SP).

An advantageous embodiment of the invention is obtained when the request (R) can further be a data identifier maintenance request (DIMR) comprising a request (R) for the heat sub-metering service provider data system (SP) to update a foreign data identifier (FDI) in a heat sub-metering service provider database (SPDB), the foreign data identifier (FDI) corresponding to one of the real estate administrator data identifiers (RADI) associated with real estate administrator owned data (RAD).

An advantageous embodiment of the invention is obtained when the subset of real estate administrator owned data (RAD) comprised by the data push request (PSR) is referenced by one or more real estate administrator data identifiers (RADI) having corresponding foreign data identifiers (FDI) in the heat sub-metering service provider database (SPDB).

An advantageous embodiment of the invention is obtained when the subset of heat sub-metering service provider owned data (SPD) comprised by the data pull request (PLR) is referenced by one or more foreign data identifiers (FDI) having corresponding heat sub-metering service provider data identifiers (SPDI) in the heat sub-metering service provider database (SPDB).

An advantageous embodiment of the invention is obtained when the real estate administrator data system is arranged to at least partially manage properties (B) comprising a number of measuring devices (M) from which sub-meter readings (SMR) are received by the heat sub-metering service provider data system (SP).

An advantageous embodiment of the invention is obtained when the real estate administrator data system is associated with a real estate administrator identifier.

An advantageous embodiment of the invention is obtained when the data pull request (PLR) comprises an identifier corresponding to a real estate administrator identifier from a list of different real estate administrator identifiers associated with different real estate administrator data systems (RA; RA1 - RA3).

An advantageous embodiment of the invention is obtained when the real estate administrator data system is arranged to be able to receive main meter readings (MMR), specifications and/or cost totals from a utility company (U) which is associated to one or more of said properties (B) by being one of their utility providers.

An advantageous embodiment of the invention is obtained when the subset of heat sub-metering service provider owned data (SPD) requested by means of the data pull request (PLR) is arranged to facilitate the real estate administrator data system (RA) to produce bills, cash collection or prepayment forecasts for consumers (CM) associated with consumption units (CU) associated with properties (B) at least partially managed by said real estate administrator data system (RA), said consumption units (CU) comprising measuring devices (M) associated with said heat sub-metering service provider data system (SP).

An advantageous embodiment of the invention is obtained when the real estate administrator data system is arranged to discover errors, faults, leaks, manipulation and/or attempts at fraud in consumption units (CU) associated with properties (B) at least partially managed by said real estate administrator data system (RA), the discovery of errors, faults, leaks, manipulation and/or attempts at fraud being facilitated by the subset of heat sub-metering service provider owned data (SPD) requested by means of the data pull request (PLR).

An advantageous embodiment of the invention is obtained when the real estate administrator data system is arranged to discover inefficient consumption in consumption units (CU) associated with properties (B) at least partially managed by said real estate administrator data system (RA), the discovery of inefficient consumption being facilitated by the subset of heat sub-metering service provider owned data (SPD) requested by means of the data pull request (PLR).

An advantageous embodiment of the invention is obtained when the real estate administrator data system is arranged to facilitate energy management, providing overview of consumption and/or advice on consumption to consumers (CM) associated with consumption units (CU) associated with properties (B) at least partially managed by said real estate administrator data system (RA), the facilitating energy management, providing overview of consumption and/or advice on consumption being facilitated by the subset of heat sub-metering service provider owned data (SPD) requested by means of the data pull request (PLR).

An advantageous embodiment of the invention is obtained when the request (R) is generated by the real estate administrator data system (RA) automatically.

An advantageous embodiment of the invention is obtained when the real estate administrator request gateway (RAGW) and the request generator (RG) are arranged to be able to generate and submit requests (R) substantially directly after occurrence of an event that makes data exchange appropriate, the event comprising e.g. change of certain real estate administrator owned data (RAD) in the real estate administrator database (RADB), expiry of a long-term deadline associated with request of certain data such as cost allocation or final billing, or expiry of a short-term deadline associated with frequent request of certain data such as surveillance or monitoring statuses, discovered errors, etc.

An advantageous embodiment of the invention is obtained when the real estate administrator data system is arranged to automatically and frequently generate and submit a data pull request (PLR) comprising a request to receive a response (RS) corresponding to an at least partially prepared response from the heat sub-metering service provider data system (SP), e.g. comprising errors, alerts, warnings or alarms.

An advantageous embodiment of the invention is obtained when said data pull request (PLR) comprises a request for data related to one or more of
measuring devices (M);
consumption sub-meters (M);
consumption sub-meter reading values (SMR);
device alarms;
calculated cost allocation;
final consumer billing;
cash collection;
prepayment forecasts;
alerts regarding failure, error or fraud discovered by the heat sub-metering service provider data system (SP);
status related to the heat sub-metering service provider data system (SP) or services provided by a heat sub-metering service provider; or
surveillance of devices (M) and systems maintained or monitored by the heat sub-metering service provider.

An advantageous embodiment of the invention is obtained when said data push request (PSR) comprises data related to one or more of
properties (B);
consumption units (CU);
consumers (CM);
moving of consumers (CM);
on account payments or prepayments; or
utility expenses.

An advantageous embodiment of the invention is obtained when the real estate administrator request gateway (RAGW) and request generator (RG) are arranged to form a client for a web service, and wherein the connection (C) is established by means of the Internet (N).

An advantageous embodiment of the invention is obtained when the connection (C) and/or the data comprised by a request (R) or response (RS) is encrypted, preferably by means of a Virtual Private Network channel, Transport Layer Security or Secure Socket Layers.

An advantageous embodiment of the invention is obtained when the request (R) comprises an XML message, preferably a SOAP message.

An advantageous embodiment of the invention is obtained when said subset of the heat sub-metering service provider owned data (SPD) in response to a data pull request (PLR) is provided to the real estate administrator data system (RA) in the form of an XML message, preferably a SOAP message.

An advantageous embodiment of the invention is obtained when the real estate administrator data system comprises a data storage for storing said real estate administrator database (RADB), a processing unit and memory unit for implementing the request generator (RG), and a network interface for facilitating the real estate administrator request gateway (RAGW).

An advantageous embodiment of the invention is obtained when the real estate administrator data system further comprises a transaction log (TL) arranged to log at least a subset of said requests (R) and responses (RS).

The present invention further relates to a method of exchanging data between a real estate administrator data system (RA) comprising real estate administrator owned data (RAD) and a heat sub-metering service provider data system (SP) comprising heat sub-metering service provider owned data (SPD), the method comprising
establishing a connection (C) between the real estate administrator data system, (RA) and the heat sub-metering service provider (SP);
generating a request (R) by means of a request generator (RG) associated with the real estate administrator data system (RA);
transferring the request (R) from the real estate administrator data system (RA) to the heat sub-metering service provider data system (SP) via the connection (C); and handling the request (R) by means of a request handler (RH) associated with the heat sub-metering service provider data system (SP);
wherein the request (R) is one or more of at least
a data pull request (PLR) whereby the real estate administrator data system (RA) requests the heat sub-metering service provider data system (SP) to provide a subset of the heat sub-metering service provider owned data (SPD) to the real estate administrator data system (RA); and
a data push request (PSR) whereby the real estate administrator data system (RA) requests the heat sub-metering service provider data system (SP) to receive a subset of the real estate administrator owned data (RAD) from the real estate administrator data system (RA).

By the present invention is provided an advantageous method of automatically exchanging data between real estate administrators and heat sub-metering service providers by allowing the real estate administrator data system to pull and push e.g. heat cost allocation related data from and to the heat sub-metering service provider data system. Thereby is facilitated that data from either system that may be relevant for both systems can always be synchronized.

The advantages, further features and particularities described above for any embodiment of the data integration system, the real estate administrator data system or the heat sub-metering servicer provider data system also apply to the method of exchanging data of the present embodiment in any combination.

An advantageous embodiment of the invention is obtained when the method of exchanging data further comprises
generating a response (RS) to the request (R) by means of a response generator (RSG) associated with the heat sub-metering service provider data system (SP);
handling the response (RS) by means of a response handler (RSH) associated with the real estate administrator data system (RA).

An advantageous embodiment of the invention is obtained when the heat sub-metering servicer provider data system (SP) in reply to said data push request (PSR) by means of the response (RS) provides an indication of success or error, and in reply to said data pull request (PLR) by means of the response (RS) provides an indication or error or provides said subset of the heat sub-metering service provider owned data (SPD).

An advantageous embodiment of the invention is obtained when the method of exchanging data further comprises maintaining a system of data identifiers, wherein
the heat sub-metering service provider data system (SP) maintains heat sub-metering service provider data identifiers (SPDI) and references real estate administrator owned data (RAD) at least partially by foreign data identifiers (FDI) corresponding to real estate administrator data identifiers (RADI); and
the real estate administrator data system (RA) maintains the real estate administrator data identifiers (RADI) and references heat sub-metering service provider data (SPD) at least partially by foreign data identifiers (FDI) corresponding to the heat sub-metering service provider data identifiers (SPDI).

An advantageous embodiment of the invention is obtained when the request (R) can further be a data identifier maintenance request (DIMR) whereby the real estate administrator data system (RA) requests the heat sub-metering service provider data system (SP) to update a foreign data identifier (FDI) in the heat sub-metering service provider database (SPDB), the foreign data identifier (FDI) corresponding to one of the real estate administrator data identifiers (RADI) associated with real estate administrator owned data (RAD).

An advantageous embodiment of the invention is obtained when the real estate administrator data system (RA) references the subset of real estate administrator owned data (RAD) comprised by the data push request (PSR) by one or more real estate administrator data identifiers (RADI) having corresponding foreign data identifiers (FDI) in the heat sub-metering service provider database (SPDB), and wherein
the real estate administrator data system (RA) references the subset of heat sub-metering service provider owned data (SPD) comprised by the data pull request (PLR) by one or more foreign data identifiers (FDI) having corresponding heat sub-metering service provider data identifiers (SPDI) in the heat sub-metering service provider database (SPDB).

An advantageous embodiment of the invention is obtained when he method of exchanging data comprises the heat sub-metering service provider data system (SP) receiving sub-meter readings (SMR) from a number of measuring devices (M) located in properties (B) which are at least partially managed by the real estate administrator data system (RA).

An advantageous embodiment of the invention is obtained when several groups (G1 - G3) of properties (B; B1 - B7) are associated with different real estate administrator data systems (RA; RA1 - RA3) each being associated with a real estate administrator identifier; and wherein the heat sub-metering service provider data system (SP) is receiving sub-meter readings (SMR) from a number of measuring devices (M) located in two or more of the several groups of the properties.

An advantageous embodiment of the invention is obtained when different real estate administrator data systems (RA; RA1 - RA3) are associated with different real estate administrator identifiers, and wherein the method comprises a step of the heat sub-metering service provider data system (SP) filtering the subset of the heat sub-metering service provider owned data (SPD) requested by the data pull request (PLR) so that it only comprises heat sub-metering service provider owned data (SPD) associated with a group (G1 - G3) of properties (B; B1 - B7) associated with a real estate administrator data system (RA; RA1 - RA3) which is identified in the data pull request (PLR) by an identifier corresponding to the real estate administrator identifier.

An advantageous embodiment of the invention is obtained when the measuring devices (M) comprise consumption meters, heat cost allocation meters, water meters, energy meters, hygrometers, humidity sensors, leak detectors and/or fire or smoke detectors.

An advantageous embodiment of the invention is obtained when the method of exchanging data comprises the heat sub-metering service provider data system (SP) receiving main meter readings (MMR), specifications and/or cost totals from a utility company (U) which is associated to one or more of said properties (B) by being one of their utility providers.

An advantageous embodiment of the invention is obtained when the method of exchanging data comprises the heat sub-metering service provider data system (SP) calculating a cost allocation of utility expenses among consumers (CM) associated with consumption units (CU) associated with properties (B) at least partially managed by said real estate administrator data system (RA) where the heat sub-metering service provider owned data (SPD) comprises sub-meter readings (SMR) received from a number of measuring devices (M) located in the properties (B).

An advantageous embodiment of the invention is obtained when the method of exchanging data comprises the heat sub-metering service provider data system (SP) arranging the subset of heat sub-metering service provider owned data (SPD) requested by means of the data pull request (PLR) to facilitate the real estate administrator data system (RA) to produce bills, cash collection or prepayment forecasts for consumers (CM) associated with consumption units (CU), facilitate energy management, providing overview of consumption and/or advice on consumption to consumers (CM) associated with consumption units (CU) or to discover inefficient consumption, errors, faults, leaks, manipulation and/or attempts at fraud in consumption units (CU), the consumption units (CU) being associated with properties (B) at least partially managed by said real estate administrator data system (RA), said consumption units (CU) comprising measuring devices (M) associated with said heat sub-metering service provider data system (SP).

An advantageous embodiment of the invention is obtained when the method of exchanging data comprises handling the request (R) in the heat sub-metering service provider data system (SP) automatically and substantially day and night, thus making the method of exchanging data a real-time processing method.

An advantageous embodiment of the invention is obtained when the method of exchanging data comprises the real estate administrator data system (RA) performing the generating a request (R) substantially directly after occurrence of an event that makes data exchange appropriate, the event comprising e.g. change of certain real estate administrator owned data (RAD) in the real estate administrator database (RADB), expiry of a long-term deadline associated with request of certain data such as cost allocation or final billing, or expiry of a short-term deadline associated with frequent request of certain data such as surveillance or monitoring statuses, discovered errors, etc.

An advantageous embodiment of the invention is obtained when the method of exchanging data comprises the heat sub-metering service provider data system (SP) performing data analysis and/or detecting irregularities in the subset of the real estate administrator owned data (RAD) subsequently to receiving the data push request (PSR).

An advantageous embodiment of the invention is obtained when the method of exchanging data comprises the heat sub-metering service provider data system (SP) preparing a response (RS) comprising a warning or alert upon detection of irregularities in the subset of the real estate administrator owned data (RAD) received with the data push request (PSR) or upon detection of irregularities or error or warning readings in sub-meter readings (SMR) received from measuring devices (M) associated with properties (B) at least partially managed by the real estate administrator data system (RA).

An advantageous embodiment of the invention is obtained when the method of exchanging data comprises the heat sub-metering service provider data system (SP) at least partially preparing a response (RS) upon detection of data irregularities or receipt of errors, warnings or alarms and storing the at least partially prepared response (RS) in a storage of the heat sub-metering service provider data system (SP); and wherein a request (R) can be a data pull request (PLR) whereby the real estate administrator data service (RA) requests the heat sub-metering service provider data system (SP) to provide the stored prepared response or provide information about stored prepared responses.

An advantageous embodiment of the invention is obtained when the method of exchanging data comprises the real estate administrator data service (RA) automatically and frequently generating and submitting a data pull request (PLR) comprising a request to receive a response (RS) corresponding to an at least partially prepared response from the heat sub-metering service provider data system (SP), e.g. comprising errors, alerts, warnings or alarms.

An advantageous embodiment of the invention is obtained when the method of exchanging data comprises the heat sub-metering service provider (SP) providing to the real estate administrator data system (RA) data related to one or more of
measuring devices (M);
consumption sub-meters (M);
consumption sub-meter reading values (SMR);
device alarms;
calculated cost allocation;
final consumer billing;
cash collection;
prepayment forecasts;
alerts regarding failure, error or fraud discovered by the heat sub-metering service provider data system (SP);
status related to the heat sub-metering service provider data system (SP) or services provided by a heat sub-metering service provider; or
surveillance of devices (M) and systems maintained or monitored by the heat sub-metering service provider.

An advantageous embodiment of the invention is obtained when the method of exchanging data comprises the real estate administrator data system (RA) providing to the heat sub-metering service provider (SP) data related to one or more of
properties (B);
consumption units (CU);
consumers (CM);
moving of consumers (CM);
on account payments or prepayments; or
utility expenses.

An advantageous embodiment of the invention is obtained when the heat sub-metering service provider data system (SP) implements a web service for the receiving of requests (R), and wherein the establishing a connection (C) is performed by means of the Internet (N).

An advantageous embodiment of the invention is obtained when the method of exchanging data comprises encrypting the request (R) and/or response (RS) and/or data enclosed therewith, preferably by means of establishing the connection (C) by means of a Virtual Private Network channel, Transport Layer Security or Secure Socket Layers.

An advantageous embodiment of the invention is obtained when the method of exchanging data comprises generating the request (R) as an XML message, preferably a SOAP message.

An advantageous embodiment of the invention is obtained when the heat sub-metering service provider data system (SP) comprises a first data storage for storing the heat sub-metering service provider owned data (SPD), a first processing unit and first memory unit for implementing the request handler (RH) and a first network interface for facilitating the connection (C), and wherein the real estate administrator data system (RA) comprises a second data storage for storing the real estate administrator owned data (RAD), a second processing unit and second memory unit for implementing the request generator (RG) and a second network interface for facilitating the connection (C).

An advantageous embodiment of the invention is obtained when the method of exchanging data further comprises logging said requests (R) by means of a transaction log (TL) associated with the heat sub-metering service provider data system (SP).

An advantageous embodiment of the invention is obtained when the method is carried out by the data integration system (DIS) according to any of the claims 1 - 42.

The present invention further relates to a computer program product comprising computer readable instructions for execution by a heat sub-metering service provider data system (SP) comprising at least a processing unit, a memory unit and network connectivity, the computer readable instructions comprising

first computer readable instructions which when executed causes the heat sub-metering service provider data system (SP) to establish a connection (C) from a real estate administrator data system (RA);
second computer readable instructions which when executed causes the heat sub-metering service provider data system (SP) to receive a request (R) from the real estate administrator data system (RA) via the connection (C);
third computer readable instructions which when executed causes the heat sub-metering service provider data system (SP) to determine if the request (R) is a data pull request (PLR) requesting a subset of heat sub-metering service provider owned data (SPD) or a data push request (PSR) providing a subset of real estate administrator owned data (RAD);
fourth computer readable instruction which is executed if the request (R) is a data pull request (PLR) and causes the heat sub-metering service provider data system (SP) to establish a request (RS) which comprises the requested subset of the heat sub-metering service provider owned data (SPD) with reference to a heat sub-metering service provider data identifier (SPDI) corresponding to a foreign data identifier (FDI) enclosed with the data pull request (PLR);
fifth computer readable instruction which is executed if the request (R) is a data push request (PLR) and causes the heat sub-metering service provider data system (SP) to store the subset of real estate administrator owned data (RAD) with reference to a foreign data identifier (FDI) corresponding to a real estate administrator data identifier (RADI) enclosed with the data push request (PSR) and establish a response (RS) which comprises an indication of success or error; and
sixth computer readable instructions which when executed causes the heat sub-metering service provider data system (SP) to send the response (RS) to the real estate administrator data system (RA) via the connection (C).

By the present invention is provided an advantageous data system for heat sub-metering service providers which enables automatic data exchange between with real estate administrator data systems by allowing real estate administrator data systems to pull and push e.g. heat cost allocation related data from and to the heat sub-metering service provider data system. Thereby is facilitated that data from either system that may be relevant for both systems can always be synchronized.

The advantages, further features and particularities described above for any embodiment of the method of exchanging data, the data integration system DIS or the heat sub-metering service provider data system SP also apply to the computer program product of the present embodiment in any combination.

An advantageous embodiment of the invention is obtained when the above-described computer program product further comprises computer readable instructions which when executed performs the method according to any of the above described embodiments of the method of exchanging data.

The present invention further relates to a computer program product comprising computer readable instructions for execution by a real estate administrator data system (RA) comprising at least a processing unit, a memory unit and network connectivity, the computer readable instructions comprising
first computer readable instructions which when executed causes the real estate administrator data system (RA) to establish a connection (C) to a heat sub-metering service provider data system (SP);
second computer readable instructions which when executed causes the real estate administrator data system (RA) to initiate generation of a request (R);
third computer readable instruction which is executed if the request (R) is a data pull request (PLR) and causes the real estate administrator data system (RA) to include in the data pull request (PLR) a request for a subset of heat sub-metering service provider owned data (SPD) with reference to a foreign data identifier (FDI) corresponding to a heat sub-metering service provider data identifier (SPDI) in the heat sub-metering service provider data system (SP);
fourth computer readable instruction which is executed if the request (R) is a data push request (PLR) and causes the real estate administrator data system (RA) include in the data push request (PSR) a subset of real estate administrator owned data (RAD) with reference to a real estate administrator data identifier (RADI) corresponding to a foreign data identifier (FDI) in the heat sub-metering service provider data system (SP);
fifth computer readable instruction which when executed causes the real estate administrator data system (RA) to receive a response (RS) from the heat sub-metering service provider data system (SP) via the connection (C); and
sixth computer readable instructions which is executed if the response (RS) comprises a subset of heat sub-metering service provider owned data (SPD) and causes the real estate administrator data system (RA) to store the subset of heat sub-metering service provider owned data (SPD) with reference to a foreign data identifier (FDI) corresponding to a heat sub-metering service provider data identifier (SPDI) enclosed with the response (RS).

By the present invention is provided an advantageous data system for real estate administrator or property owner which enables automatic data exchange with a heat sub-metering service provider data system by allowing the real estate administrator data system to pull and push e.g. heat cost allocation related data from and to the heat sub-metering service provider data system. Thereby is facilitated that data from either system that may be relevant for both systems can always be synchronized.

The advantages, further features and particularities described above for any embodiment of the method of exchanging data, the data integration system DIS or the real estate administrator data system RA also apply to the computer program product of the present embodiment in any combination.

An advantageous embodiment of the invention is obtained when the above-described computer program product further comprises computer readable instructions which when executed performs the method according to any of the above described embodiments of the method of exchanging data.

### The drawings

The invention will in the following be described with reference to the drawings where
Fig. 1 illustrates an embodiment of the invention,
Fig. 2 illustrates an embodiment of the invention with response systems and logging,
Fig. 3 illustrates an embodiment of the invention including network connectivity and foreign identifiers,
Fig. 4 illustrates an embodiment of the invention with several real estate administrators,
Fig. 5 shows relations to properties, consumption units and consumers in an embodiment of the invention,
Fig. 6 shows relations to several properties and several real estate administrators in an embodiment of the invention,
Fig. 7 illustrates an embodiment of the invention with a relationship to a utility company,
Fig. 8 illustrates an embodiment of the invention with a different relationship to a utility company,
Fig. 9 illustrates an embodiment of the invention regarding a heat sub-metering service provider data system, and
Fig. 10 illustrates an embodiment of the invention regarding a real estate administrator data system.

### Detailed description

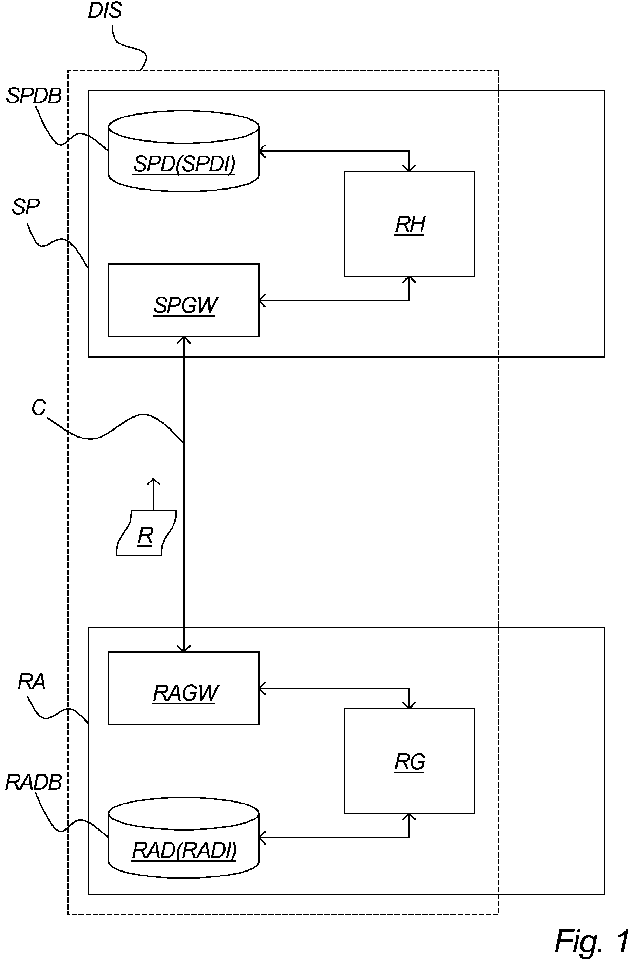

Fig. 1 illustrates an embodiment of the present invention, where a data integration system DIS is illustrated by the dashed outline to comprise at least a part of a heat sub-metering service provider data system SP and at least a part of a real estate administrator data system RA.

The real estate administrator may be anyone managing a real estate property including a property owner, an owner's representative or administrator, a real estate administration company, a landlord, a caretaker, etc. In other words, the real estate administrator is the entity that maintains information about the tenants, renters, users, etc. amongst who the utility costs for the property are to be allocated. The property may be any real estate property or group of properties with several users, e.g. an apartment complex, a block of flats, a rented house, a house with several rooms with different renters, a building comprising shops, stores or outlets, possibly combined with flats, etc. The real estate administrator data system RA comprises a real estate administrator database RADB comprising real estate administrator owned data RAD referenced by real estate administrator data identifiers RADI.

The heat sub-metering service provider may be any entity acting as a service provider for the real estate administrator with regard to gathering absolute or relative consumption of heat or water, e.g. data from room heaters or cold water meters, by the users of a property, and use the gathered data to provide a heating or water cost allocation, a basis for calculating such cost allocation or a final bill for heating or water. It is noted that the gathering of data may include the heat sub-metering service provider making the readings of measurement devices themselves, or they may receive the readings from the users, the property administrator, a caretaker or a utility company, and just gather the readings in a heat sub-metering service provider database SPDB for use in the cost allocation. The heat sub-metering service provider database SPDB comprises heat sub-metering service provider owned data SPD referenced by heat sub-metering service provider data identifiers (SPDI).

The term owned is in the current context when used about data referring to being responsible for the maintenance of the data and holding of the master version of the data, and is not necessarily referring to legal ownership. Hence, in a typical data integration system according to the invention, the real estate administrator owned data RAD may e.g. comprise information about buildings, rental units and users, whereas the heat sub-metering service provider owned data SPD may e.g. comprise readings from the measuring devices in the rental units as well as cost allocation calculation results.

The real estate administrator data system RA further comprises a request generator RG being connected to the real estate administrator database RADB in order to have access to real estate administrator owned data RAD. The real estate administrator data system RA also comprises a real estate administrator request gateway RAGW connected to the request generator RG.

The heat sub-metering service provider data system SP further comprises a request handler RH connected to the heat sub-metering service provider database SPDB and connected to a heat sub-metering service provider request gateway SPGW.

The data integration system DIS further comprises a connection C established between the real estate administrator request gateway RAGW and the heat sub-metering service provider request gateway SPGW for allowing requests R to be submitted from the real estate administrator data system RA to the heat sub-metering service provider data system SP. The connection may be any kind of connection suitable for transmitting data or text, e.g. the request R which is preferably an XML document. The heat sub-metering service provider request gateway SPGW and the request handler RH is preferably implemented as a web service using SOAP messaging, but any suitable web service implementation or the like is within the scope of the present invention.

In the data integration system of Fig. 1 the real estate administrator data system RA can establish by means of the request generator a request R e.g. comprising real estate administrator owned data RAD and push this request and data to the heat sub-metering service provider data system, where the request will be handled by the request handler, and the data probably inserted into the heat sub-metering service provider database SPDB. In a preferred embodiment the request handler comprises a data analysis mechanism to consider if the received data are appropriate and consistent with existing data and not immediately faulty.

The embodiment of Fig. 1 therefore allows the heat sub-metering data system SP to be automatically updated upon change in the data maintained by the real estate administrator data system RA, instead of requiring human interaction of infrequently selecting data that might have been changed since last update and export them to a file, which is then imported and stored in the heat sub-metering service provider data system. By the embodiment of Fig. 1 the two databases can be maintained in synchrony as far as data relevant for both systems are concerned. Further, the data updates can be performed piece by piece as data changes occur instead of awaiting batch updates.

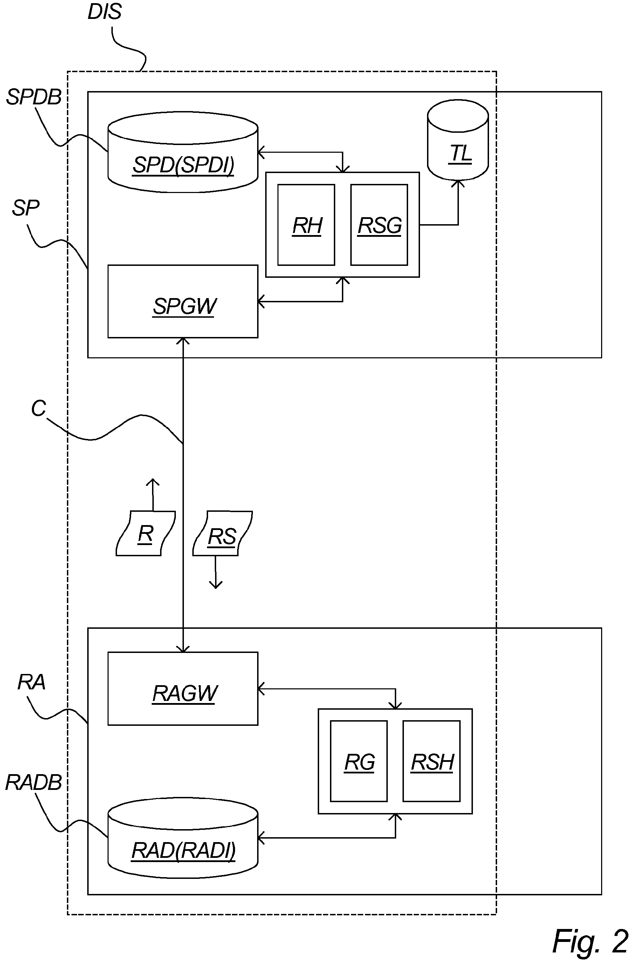

Fig. 2 illustrates an embodiment which basically builds on the embodiment of Fig. 1. In Fig. 2 the heat sub-metering service provider data system SP now comprises a response generator RSG in connection with the heat sub-metering service provider database SPDB, the request handler RH and the heat sub-metering service provider request gateway SPGW. The response generator RSG is able to create a response RS to submit to the real estate administrator data system RA in reply to requests R received therefrom.

The real estate administrator data system RA now comprises a response handler RSH in connection with the real estate administrator request gateway RAGW, the request generator RG and the real estate administrator database RADB. The response handler RSH is able to interpret and handle responses RS received from the heat sub-metering service provider data system SP via the connection C.

The embodiment of Fig. 2 allows for the real estate administrator data system RA to generate at least two kinds of requests R: a so-called data push request PSR as explained above, where the real estate administrator data system RA transmits its own data RAD to the heat sub-metering data system, and a so-called data pull request PLR where the real estate administrator data system RA generates a request which requests heat sub-metering service provider owned data SPD to be provided to the real estate administrator data system RA.

When receiving a data push request PSR generated by the request generator RG, the request handler RH stores the data in the heat sub-metering service provider database SPDB and the response generator RSG establishes a simple response RS indicating success or failure, or, in a more advanced embodiment, provides additional error information or related data if the request handler has not been able to use the received data straightaway. The response handler RSH receives the response RS and may initiate some action, e.g. error correction or resubmission, if the response indicates a failure. If a success response is received the response handler may mark the send data as synchronized with the heat sub-metering service provider database SPDB.

A data pull request PLR is generated by the request generator RG when the real estate administrator data system RA needs to validate some data maintained by the heat sub-metering service provider SP, when the real estate administrator data system RA has encountered a date where it has been agreed that the heat sub-metering service provider data system should have some relevant data ready, e.g. a cost allocation calculation, or simply at certain intervals in order to not miss any information from the heat sub-metering service provider data system. Requests regarding the latter may e.g. be generated and sent several times a day, e.g. each minute, every 5 minutes or every hour as they are the only way for the heat sub-metering service provider data system to submit information to the real estate administrator data system in a preferred embodiment of the invention. The data pull request PLR is received by the request handler RH which validates the request and the response generator RSG retrieves the required data from the heat sub-metering service provider database SPDB and establishes a proper response RS comprising the requested data and submits it via the connection C to the real estate administrator data system where the response handler validates the data and stores them in the real estate administrator database RADB. In a preferred embodiment there is some way for the heat sub-metering service provider data system SP to know that the data got through to the real estate administrator data system, e.g. by the real estate administrator data system submitting a receipt or by having the agreed protocol require that data are re-requested by a similar data pull request PLR if something went wrong with the first submission.

In the embodiment of Fig. 2 a transaction log TL is further comprised by the heat sub-metering service provider data system SP. The transaction log TL is used to store together with timestamps and sender and/or recipient all or certain requests from the real estate administrator data system RA, and in a preferred embodiment also responses RS are stored. In a preferred embodiment also the real estate administrator data system comprises a transaction log. The transaction log TL can be beneficial when investigating the origin of a data error, or when documenting that e.g. contractually obliged data have been exchanged.

It is noted that either the response system RS, RSG, RSH or the transaction log TL may also be combined with the embodiment of Fig. 1 without the other within the scope of the present invention.

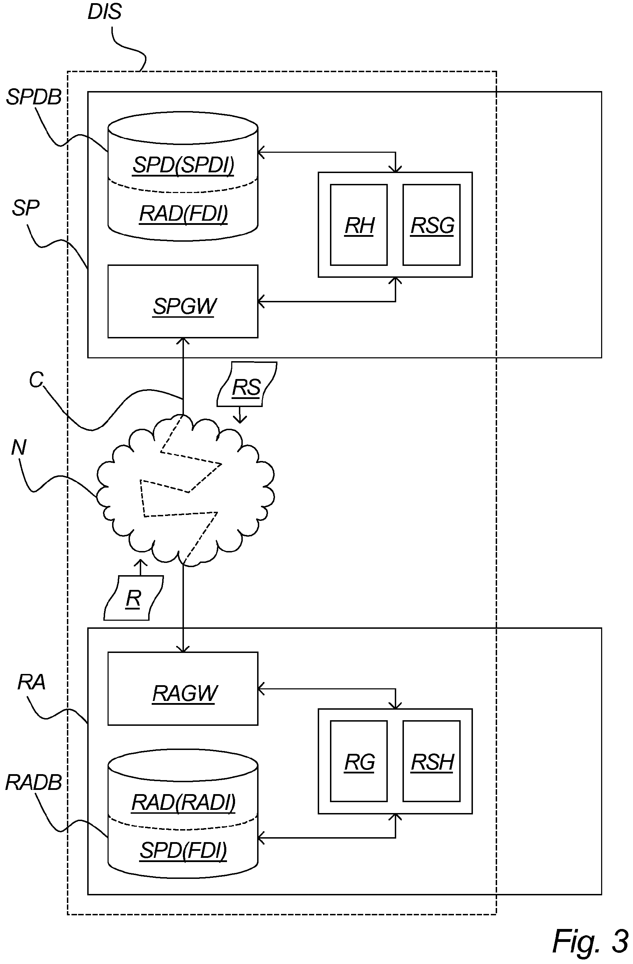

Fig. 3 illustrates an embodiment that is basically built upon the embodiment of Fig. 2 without the transaction log TL. Combining the embodiment of Fig. 3 with the transaction log of Fig. 2, or using any of the additional features of Fig. 3 without the response system of Fig. 2, are also within the scope of the present invention.

In the embodiment of Fig. 3 the heat sub-metering service provider database SPDB further comprises real estate administrator owned data RAD identified by foreign data identifiers FDI. These data RAD are the data received by data push requests PSR from the real estate administrator data system RA. As the real estate administrator owned data RAD are maintained by the real estate administrator data system RA the heat sub-metering service provider data system SP has assigned the data with foreign data identifiers FDI. These are preferably corresponding to the relevant real estate administrator data identifiers RADI so that common data identifiers exist for the corresponding data between the two databases and conversion or mapping of received data can be avoided. Similarly, the real estate administrator database RADB in the embodiment of Fig. 3 comprises heat sub-metering service provider owned data SPD identified by foreign data identifiers FDI which the real estate administrator data system RA has created, preferably with correspondence to the related heat sub-metering service provider data identifiers SPDI. The real estate administrator owned data RAD(FDI) stored in the heat sub-metering service provider database SPDB is preferably only a subset of the entire real estate administrator owned data RAD as some of the data would be irrelevant or unnecessary and confidential for the heat sub-metering service provider data system. Likewise, the heat sub-metering service provider owned data SPD(FDI) contained in the real estate administrator database RADB only includes a subset of the entire heat sub-metering service provider owned data SPD for similar reasons.

In order to be able to maintain the data identifiers among the systems, the embodiment of Fig. 3 preferably comprises a third kind of requests: data identifier maintenance requests DIMR, which are used to request updates of data identifiers, i.e. primary keys. For example, if the real estate administrator data system identifies a certain data object, e.g. an apartment, by a real estate administrator data identifier RADI, say A17, and this object also exists in the heat sub-metering service provider database with a corresponding foreign data identifier FDI, i.e. again A17, the two systems can exchange data related to this apartment, or the real estate administrator who typically owns the apartment data, may change the data with reference to the common identifier A17. However, if the real estate administrator data system for some reason renamed the very data identifier for the apartment to, say B14, the two systems would not be able to exchange data for this apartment anymore with the usual request types, not even the new name of the data identifier. Hence, in a preferred embodiment data identifier maintenance is enabled by introduction of data identifier maintenance requests DIMR, which the real estate administrator data system may use to e.g. change an existing data identifier by e.g. including both the old and the new identifier name, i.e. A17 and B14 from the example, or create new data identifiers for new objects by data identifier maintenance requests that are specific for the purpose of transmitting a data object with a data identifier that not already exists in the target database.

In a different aspect of the embodiment of Fig. 3 there is comprises a network N illustrated as a cloud with a dashed connection being routed through the network. This illustrates that the connection C may preferably be a convention data connection, e.g. using a conventional computer network N, preferably simply the Internet as the real estate administrator data system and the heat sub-metering service provider are unlikely to be located within reach of each other by means of typical local area networks.

The network feature of the embodiment of Fig. 3 can be combined with any of the embodiments described above with regards to Fig. 1 or 2, with or without the foreign data identifier features described above.

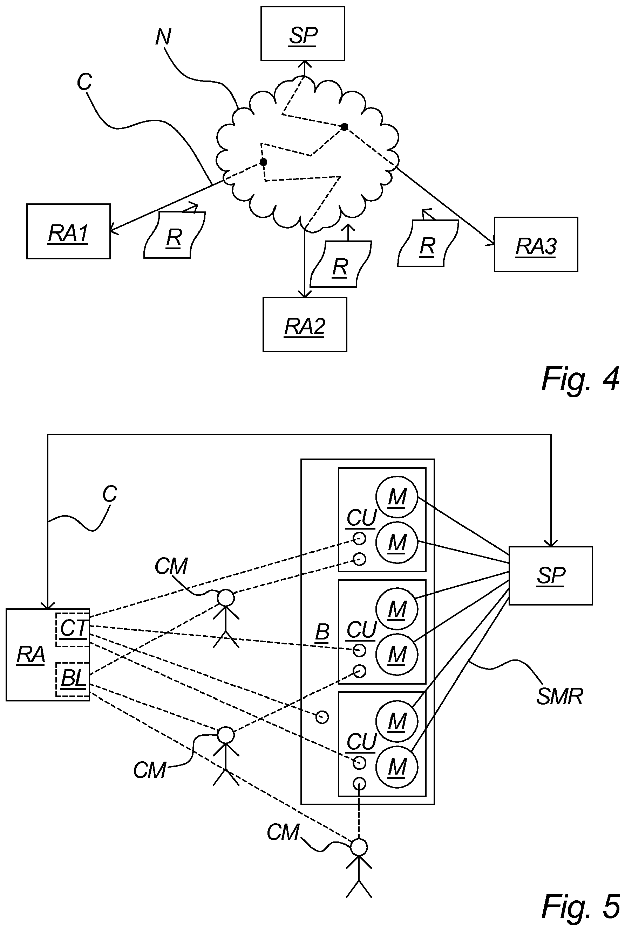

An important aspect of the present invention is that a heat sub-metering service provider data system SP typically exchanges data with several different real estate administrator data systems RA1, RA2, RA3 as illustrated in Fig. 4. As described above, a computer network N, preferably the Internet, preferably with a VPN or other encrypted connection C, is the preferred way of connecting the different real estate administrator data systems to the heat sub-metering service provider data system SP. The real estate administrator data systems RA1, RA2, RA3 may send requests R to the heat sub-metering service provider SP. It is noted, that the heat sub-metering service provider SP may also cooperate with other real estate administrators that may not be part of a data integration system DIS according to the present invention. In order for the heat sub-metering service provider SP to know the sender of a request in order to send the response to the right requester, the real estate administrator data systems preferably have different real estate administrator identifiers, preferably created by the heat sub-metering service provider, or relating to a unique ID such as e.g. public IP address, MAC address, telephone number, company registration number, etc. The first option, i.e. to have the heat sub-metering service provider assign the real estate administrator identifiers is preferred in order to avoid changes of the identifier. In a preferred embodiment the real estate administrator identifiers are also related to a password, digital signature or other way to avoid unauthorized persons to obtain confidential data by making requests with falsified real estate administrator identifiers.

In the embodiment of Fig. 5 is comprised a heat sub-metering service provider data system SP with a connection C to a real estate administrator data system RA. Fig. 5 further comprises a building or property B, comprising a number of consumption units CU, e.g. apartments, each consumption unit CU comprising a number of measuring devices M. The heat sub-metering service provider data system SP is connected to each of the measuring devices M in order to obtain sub-meter readings SMR.

The real estate administrator data system RA comprises an interface to a caretaker CT or similar person who is responsible for taking care of the property B and the consumption units CU, as indicated by dashed lines to illustrate the less firm relationship. Each consumption unit CU is also related by a dashed line to a consumer CM which is also related by dashed line to a customer or billing interface BL of the real estate administrator data system RA.

Examples of data that the real estate administrator data system RA pushes to the heat sub-metering service provider data system SP may e.g. comprise data related to the property B, the consumption unit CU and the consumers CM, including data identifiers, names, addresses, area, number of rooms, number of heaters, types of utility provided, prepayments, special agreements, etc.

Examples of data that the real estate administrator data system RA pulls from the heat sub-metering service provider data system SP may e.g. comprise data related to the measuring devices M installed in the consumption units CU, the meter readings SMR, calculated cost allocation for the consumers CM, etc.

In a preferred embodiment the heat sub-metering service provider data system may further send alerts, either when requested or by an additional request type initiated by the heat sub-metering service provider data system, e.g. relating to data deduced from the measuring devices M such as warnings of inefficient or irregular consumption, leak or smoke alerts, low battery, manipulation, backflow, errors in electronics or software, etc. It is noted, that because the typical and logical distribution of responsibility is that the real estate administrator should consider and possibly act on the warnings or alerts, as they are the owner's representatives and they have caretakers or similar staff attached for that purpose. Therefore the real estate administrator data system needs to receive the alert, as the heat sub-metering service provider cannot act on the most of the alerts anyway.

The measuring devices M preferably comprise consumption sub-meters, e.g. heat cost allocator sub-meters typically installed on heaters in apartments, cold water meters, etc. The measuring devices M may further comprise e.g. leak detectors, humidity sensors, smoke detectors, etc. The measuring devices M may be read off manually, or may comprise wired or wireless technologies for remote and/or automatic reading, e.g. by incorporating network connectors or radio transceivers.

An advantageous way of performing leak detection of fluid systems, be it heating water, cold or hot utility water, oil, gas, etc., comprises providing an appropriate fluid meter, e.g. a water meter, and arranging it for remote reading by wired or wireless network, radio reading, etc. By reading off the water meter frequently, e.g. every 20 minutes, it can be determined for a well-functioning system that there will probably be periods, e.g. during the night, where the difference between consecutive readings will be zero. As a zero difference in the meter reading over e.g. 20 minutes means that no fluid, e.g. heating water, is consumed, it can be noted that the corresponding fluid system is tight. Whenever the meter reading starts to always change a bit even during night, even for several consecutive nights, it may be relevant for a caretaker to investigate if the fluid system has a leak. In a configuration where the measuring devices cannot be read off frequently, e.g. every 20 minutes, for practical reasons, the measuring devices may be provided with small memory units, e.g. flash memory units which are becoming inexpensive, and thereby be able to read their own value off every, say, 20 minutes and store the readings in the memory unit. When the measuring unit is read off, the entire list of readings stored in the memory unit is delivered, and may still be used to calculate reading differences between consecutive readings e.g. during the night, even though the data were not delivered continuously, and thereby determine of the fluid system should be investigated.

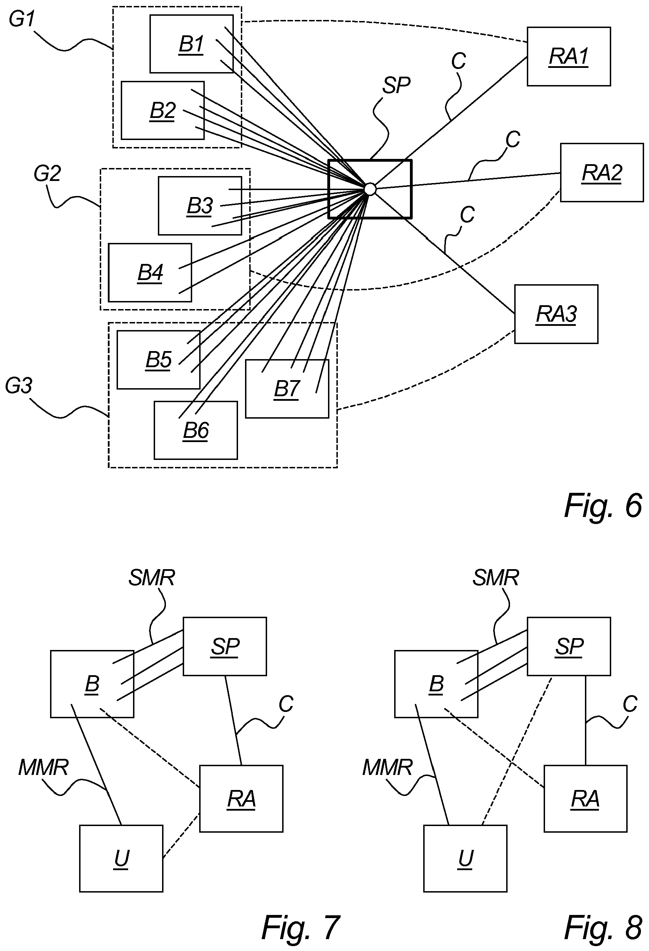

Fig. 6 illustrates a possible relationship between a heat sub-metering service provider data system SP, several real estate administrator data systems RA1, RA2, RA3, and several groups G1, G2, G3 of properties B1 - B7. The heat sub-metering service provider data system SP is connected to the real estate administrator data systems RA1, RA2, RA3 by means of connections C as described above. The heat sub-metering service provider data system is further connected to several measuring devices within each property B1 - B7, as illustrated by the several solid lines going from the heat sub-metering service provider data system SP to each of the properties B1 - B7.

Each of the real estate administrator data systems RA1 - RA3 are related to one of the groups G1 - G3 of properties B1 - B7 as illustrated by the dashed lines. When seen together with Fig. 5, this embodiment illustrates that each real estate administrator data system is related to several properties B, consumption units CU and consumers CM. As illustrated in Fig. 6 the number of properties in a group may vary, as some real estate administrator data system may be managing a huge amount of properties, whereas other may manage only one or a few.

When exchanging data, the heat sub-metering service provider data system in particular should preferably be configured to not being able to exchange data related to one group of properties, say, G2 with a real estate administrator data system, say, RA1, if they are not related, as they are not in this particular example. So with the example of Fig. 6, the heat sub-metering service provider data system SP should only exchange data related to group G1 with real estate administrator RA1, data related to group G2 with real estate administrator RA2, etc. In order to accomplish this, the heat sub-metering service provider data system SP may preferably use the unique real estate administrator identifiers described above with reference to Fig. 4 for identifying which properties, consumption units, consumers, measuring devices, etc. are comprised by each group, or, in other words, related to each real estate administrator.

It is noted that to the extent possible within the legal framework and the agreements with the real estate administrators, the heat sub-metering service provider may preferably correlate data between different groups to try to deduce tendencies, general teaching, etc., e.g. regarding performance of certain utility systems over other, regarding typical consumer behavior of different demographic or geographical circumstance, comparison of different measuring meter technologies, etc. The fact that a heat sub-metering service provider typically has access to data from a lot more properties than any real estate administrator may provide opportunities for determining valuable statistics or knowledge, which may be used for providing additional advice or other alerts to the real estate administrators, of course with all personal or sensitive information removed.

Fig. 7 illustrates how a utility company U may be related to the configuration of a real estate administrator data system RA, a heat sub-metering service provider SP and a property B as described above. In Fig. 7 the utility company U is connected to the property B in order to receive main meter readings MMR. As described above for sub-meter reading, the connection to received main meter readings may comprise a continuous connection, a connection that is only established when necessary or it may be a manual reading that is submitted to the utility company by traditional means. The utility company is also related to the real estate administrator RA as illustrated by a dashed line, as the utility company U typically bills the real estate administrator RA for e.g. the total heating consumption in the property B. In this embodiment the real estate administrator data system RA preferably transmits information about the total bill to the heat sub-metering service provider in accordance with a data integration system of the present invention, thereby allowing the heat sub-metering service provider to calculate bills for the individual consumers based on the total expenses and the sub-meter readings SMR.

Fig. 8 illustrates an alternative embodiment resembling the embodiment of Fig. 7, but where the utility company U is now loosely related to the heat sub-metering service provider SP instead of the real estate administrator RA, meaning that the heat sub-metering service provider receives the total expenses and/or the main meter readings directly from the utility company U instead of via the real estate administrator data system. The data integration system DIS of the present invention may allow for the utility company to connect to the heat sub-metering service provider request gateway SPGW and submit a push-request in order to push the expense data to the heat sub-metering service provider data system, or the utility company may forward the data by other means. The utility company U may in an embodiment of the invention still be related to the real estate administrator also, in order to bill them.

Examples of data push requests PSR may e.g. comprise:
updateConsumptionUnit (updates the data for a single consumption unit, e.g. location of heaters, water taps, etc.)
   - Parameters: CustomerKey (real estate administrator identifier), PropertyKey (data identifier for the property B) and ConsumptionUnitKey (data identifier for the consumption unit CU)
   - Enclosed data: ConsumptionUnit (a data object comprising data for the consumption unit CU, either the entire object or only changed fields)
   - Response: simple responses indicating Success, AuthenticationError, UnknownProperty or UnknownConsumptionUnit
updateConsumer (updates the data for a single consumer, e.g. name, email address, date of moving in or out)
   - Parameters: CustomerKey (real estate administrator identifier), PropertyKey (data identifier for the property B), ConsumptionUnitKey (data identifier for the consumption unit CU) and ConsumerKey (data identifier for the consumer CM)
   - Enclosed data: Consumer (a data object comprising data for the consumer CM, either the entire object or only changed fields)
   - Response: simple responses indicating Success, AuthenticationError, UnknownProperty, UnknownConsumptionUnit or UnknownConsumer sendPrepayments (includes data for all prepayments related to a specific utility type, e.g. heating or water, optionally in a specific property B)
   - Parameters: CustomerKey (real estate administrator identifier), UtilityTypeKey (data identifier for the utility type), PropertyKey (data identifier for the property B, optional)
   - Enclosed data: Prepayments (a set of data objects comprising data for the prepayments defined by the parameters and with reference to consumers CM and consumption units CU)
   - Response: simple responses indicating Success, AuthenticationError, UnknownProperty, UnknownUtilityType
Etc.

Examples of data pull requests PLR may e.g. comprise:
requestMeters (requests information about all measuring devices M, possibly of a certain type, located in a certain property B)
   - Parameters: CustomerKey (real estate administrator identifier), PropertyKey (data identifier for the property B), MeterTypeKey (data identifier for meter types, optional)
   - Enclosed data: MetersOfProperty (a set of data objects comprising data for the measuring devices M in the property B, e.g. type, serial number, location with reference to ConsumptionUnitKey and a room type, date of installation or dismounting, etc.)
   - Response: data response including the MetersOfProperty object, or simple responses indicating AuthenticationError, UnknownProperty or UnknownMeterType
requestRawReadingValues (requests the raw reading values of all measuring devices M, possibly of a certain type, located in a certain property B)
   - Parameters: CustomerKey (real estate administrator identifier), PropertyKey (data identifier for the property B), MeterTypeKey (data identifier for meter types, optional), StartDate, EndDate (dates defining a range for which meter readings are required)
   - Enclosed data: RawReadingValues (a set of data objects comprising data for the raw reading values of measuring devices M in the property B, e.g. type, serial number, location with reference to ConsumptionUnitKey, dates and values of readings, etc.)
   - Response: data response including the RawReadingValues object, or simple responses indicating AuthenticationError, UnknownProperty, UnknownMeterType or DateError
requestFinalConsumerBills (requests calculated final bills for all consumers CM for a certain utility type, optionally related to a certain property B)
   - Parameters: CustomerKey (real estate administrator identifier), UtilityTypeKey (data identifier for the utility type), PropertyKey (data identifier for the property B, optional)
   - Enclosed data: FinalConsumerBills (a set of data objects comprising amounts and information to include in final cost allocation bills for the consumers of a certain utility type, optionally in a certain property, grouped by ConsumerKey)
   - Response: data response including the FinalConsumerBills object, or simple responses indicating AuthenticationError, UnknownProperty or UnknownUtilityType
requestAlerts (polling request to see if any alerts awaits submission, possibly limited to a specific alert type or severity, or a specific property B)
   - Parameters: CustomerKey (real estate administrator identifier), PropertyKey (data identifier for the property B, optional), AlertTypeKey (data identifier for the alert type, optional), AlertSeverityKey (data identifier for the alert severity, optional)
   - Enclosed data: Alerts (a set of data objects comprising alert objects with information about date and time, type, severity, location with reference to property, consumption unit, etc.)
   - Response: data response including the Alerts object, or simple responses indicating AuthenticationError, UnknownProperty, UnknownAlertType or UnknownAlertSeverity
Etc.

Examples of data identifier maintenance request DIMR may e.g. comprise:
updatePropertyKey (changes the data identifier of a certain property)
   - Parameters: CustomerKey (real estate administrator identifier), PropertyKey (the old data identifier for the property), NewPropertyKey (the new data identifier for the property)
   - Enclosed data: none
   - Response: Simple responses indicating AuthenticationError or UnknownProperty
Etc.

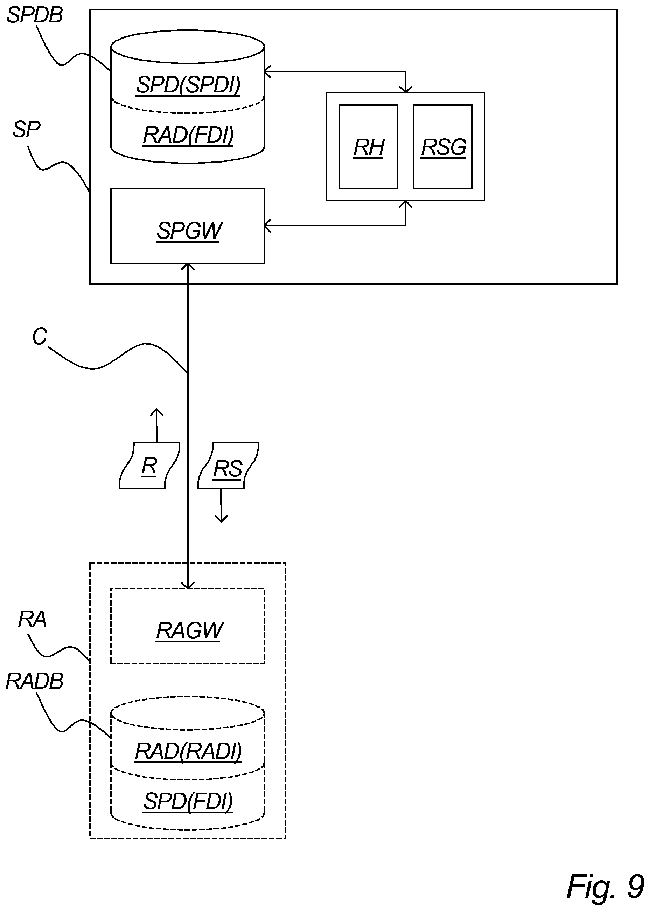

Fig. 9 illustrates a heat sub-metering service provider data system SP according to an embodiment of the present invention. It comprises a heat sub-metering service provider database SPDB comprising heat sub-metering service provider owned data SPD identified by heat sub-metering service provider data identifiers SPDI and real estate administrator owned data RAD identified by foreign identifiers FDI.

The heat sub-metering service provider data system SP further comprises a heat sub-metering service provider request gateway SPGW usable to establish a connection C, and a request handler RH and a response generator RSG for handling received requests R and generating responses RS in reply.

The heat sub-metering service provider data system SP is communicating requests R and responses RS with a real estate administrator data system RA, which comprises a real estate administrator request gateway RAGW and a real estate administrator database RADB comprising real estate administrator owned data RAD identified by real estate administrator data identifiers RADI and heat sub-metering service provider owned data SPD identified by foreign data identifiers FDI.

The functioning and possible further features of the embodiment of Fig. 9 resembles the embodiments of the heat sub-metering service provider data system SP described above in relation to a data integration system DIS, with reference to Fig. 1 - 8.

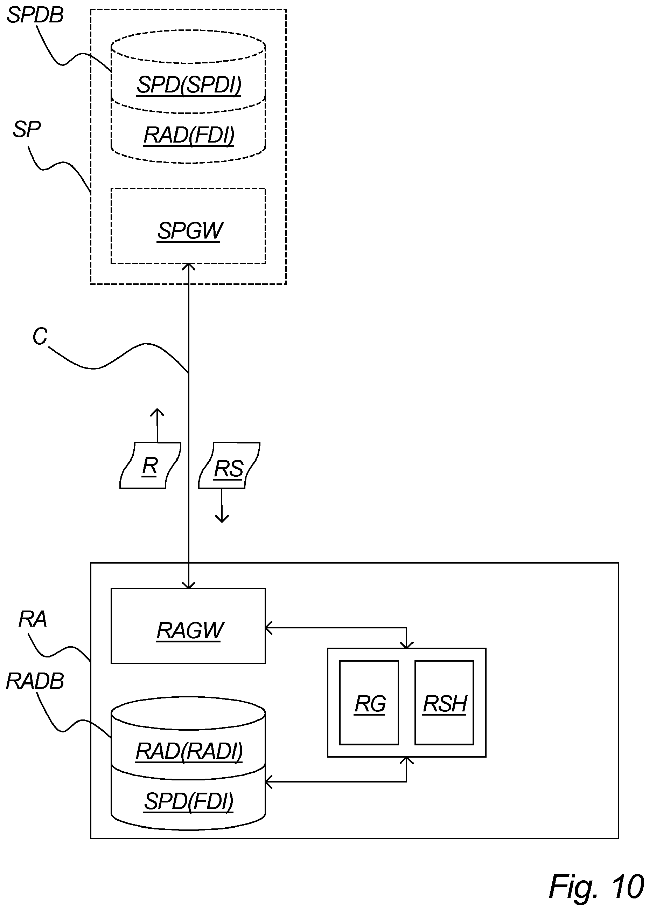

Fig. 10 illustrates a real estate administrator data system RA according to an embodiment of the present invention. It comprises a real estate administrator database RADB comprising real estate administrator owned data RAD identified by real estate administrator data identifiers RADI and heat sub-metering service provider owned data SPD identified by foreign data identifiers FDI.

The real estate administrator data system RA further comprises a real estate administrator request gateway RAGW usable to establish a connection C, and a request generator RG and a response handler RSH for generating requests R and handling received responses RS.

The real estate administrator data system RA is communicating requests R and responses RS with a heat sub-metering service provider data system SP, which comprises a heat sub-metering service provider request gateway SPGW and a heat sub-metering service provider database SPDB comprising heat sub-metering service provider owned data SPD identified by heat sub-metering service provider data identifiers SPDI and real estate administrator owned data RAD identified by foreign identifiers FDI.

The functioning and possible further features of the embodiment of Fig. 10 resembles the embodiments of the real estate administrator data system RA described above in relation to a data integration system DIS, with reference to Fig. 1 - 8.

## Claims

1. A data integration system (DIS) arranged to integrate data from a heat sub-metering service provider data system (SP) and a real estate administrator data system (RA),
wherein the heat sub-metering service provider data system (SP) is arranged to receive sub-meter readings (SMR) from a number of measuring devices (M), at least some of which being consumption meters in the form of heat cost allocation meters, located in consumption units (CU) located in properties (B) which are at least partially managed by the real estate administrator data system (RA);
the data integration system (DIS) comprising
- a real estate administrator database (RADB) associated with the real estate administrator data system (RA); the real estate administrator database (RADB) at least comprising real estate administrator owned data (RAD) associated with real estate administrator data identifiers (RADI); the real estate administrator owned data (RAD) at least comprising data related to said consumption units (CU) and said properties (B);
- a real estate administrator request gateway (RAGW) associated with the real estate administrator data system (RA);
- a request handler (RH) associated with the real estate administrator data system (RA); the request handler (RH) being arranged to handle a request (R) received through the real estate administrator request gateway (RAGW);
- a response generator (RSG) associated with the real estate administrator data system (RA); the response generator (RSG) being arranged to generate a response (RS) and submit the response through the real estate administrator request gateway (RAGW);
- a heat sub-metering service provider database (SPDB) associated with the heat sub-metering service provider data system (SP); the heat sub-metering service provider database (SPDB) at least comprising heat sub-metering service provider owned data (SPD) associated with heat sub-metering service provider data identifiers (SPDI); the heat sub-metering service provider owned data (SPD) at least comprising said sub-meter readings (SMR) received from the number of measuring devices (M) located in the properties (B);
- a heat sub-metering service provider request gateway (SPGW) associated with the heat sub-metering service provider data system (SP); and
- a request generator (RG) associated with the heat sub-metering service provider data system (SP); the request generator (RG) being arranged to generate the request (R) and submit the request (R) through the heat sub-metering service provider request gateway (SPGW);
- a response handler (RSH) associated with the heat sub-metering service provider data system (SP); the response handler (RSH) being arranged to handle the response (RS) received through the heat sub-metering service provider request gateway (SPGW);
wherein the real estate administrator request gateway (RAGW) and the heat sub-metering service provider request gateway (SPGW) are arranged to establish a connection (C) between them for transfer of the request (R).

2. The data integration system according to claim 1, wherein the request (R) is one or more of at least
- a data push request (PSR) comprising a request (R) for the heat sub-metering service provider data system (SP) to provide a subset of the heat sub-metering service provider owned data (SPD) to the real estate administrator data system (RA); and
- a data pull request (PLR) comprising a request (R) for the heat sub-metering service provider data system (SP) to receive a subset of the real estate administrator owned data (RAD) from the real estate administrator data system (RA).

3. The data integration system according to any of the previous claims, comprising a system of data identifiers comprising real estate administrator data identifiers (RADI) maintained by the real estate administrator data system (RA) and foreign data identifiers (FDI), wherein the heat sub-metering service provider data system (SP) is arranged to reference real estate administrator owned data (RAD) at least partially by foreign data identifiers (FDI) corresponding to real estate administrator data identifiers (RADI); wherein the real estate administrator data identifiers (RADI) comprise one or more of consumer (CM) keys, consumption unit (CU) keys or property (B) keys.

4. The data integration system according to any of the previous claims, wherein the request (R) can further be a data identifier maintenance request (DIMR) comprising a request (R) for the heat sub-metering service provider data system (SP) to update a foreign data identifier (FDI) in the heat sub-metering service provider database (SPDB), the foreign data identifier (FDI) corresponding to one of the real estate administrator data identifiers (RADI) associated with real estate administrator owned data (RAD).

5. The data integration system according to any of the previous claims, wherein the subset of real estate administrator owned data (RAD) comprised by the data pull request (PLR) is referenced by one or more real estate administrator data identifiers (RADI) having corresponding foreign data identifiers (FDI) in the heat sub-metering service provider database (SPDB).

6. The data integration system according to any of the previous claims, wherein several groups (G1 - G3) of properties (B; B1 - B7) are associated with different real estate administrator data systems (RA; RA1 - RA3) each being associated with a real estate administrator identifier; and wherein the heat sub-metering service provider data system (SP) is arranged to receive sub-meter readings (SMR) from a number of measuring devices (M) located in two or more of the several groups of the properties.

7. The data integration system according to any of the previous claims, wherein a subset of heat sub-metering service provider owned data (SPD) provided by means of a data push request (PSR) is arranged to facilitate the real estate administrator data system (RA) to discover inefficient consumption, errors, faults, leaks, manipulation and/or attempts at fraud, or facilitate energy management, providing overview of consumption and/or advice on consumption, in the consumption units (CU) of the properties (B) at least partially managed by said real estate administrator data system (RA).

8. The data integration system according to any of the previous claims, wherein said data push request (PSR) comprises a request with data related to one or more of
- measuring devices (M);
- consumption sub-meters (M);
- consumption sub-meter reading values (SMR);
- device alarms;
- alerts regarding failure, error or fraud discovered by the heat sub-metering service provider data system (SP);
- status related to the heat sub-metering service provider data system (SP) or services provided by a heat sub-metering service provider; or
- surveillance of devices (M) and systems maintained or monitored by the heat sub-metering service provider.

9. The data integration system according to any of the previous claims, wherein said data pull request (PLR) comprises a request for data related to one or more of
- properties (B);
- consumption units (CU);
- consumers (CM); or
- moving of consumers (CM).

10. The data integration system according to any of the previous claims, wherein the real estate administrator request gateway (RAGW) and request handler (RH) are arranged to form a web service and wherein the connection (C) is established by means of the Internet (N); preferably wherein the connection (C) and/or the data comprised by a request (R) or response (RS) is encrypted.

11. A heat sub-metering service provider data system (SP),
wherein the heat sub-metering service provider data system (SP) is arranged to receive sub-meter readings (SMR) from a number of measuring devices (M), at least some of which being consumption meters in the form of heat cost allocation meters, located in consumption units (CU) located in properties (B) which are at least partially managed by real estate administrator data system (RA);
the heat sub-metering service provider data system (SP) comprising
- a heat sub-metering service provider database (SPDB) at least comprising heat sub-metering service provider owned data (SPD) associated with heat sub-metering service provider data identifiers (SPDI); the heat sub-metering service provider owned data (SPD) at least comprising said sub-meter readings (SMR) received from the number of measuring devices (M) located in the properties (B);
- a heat sub-metering service provider request gateway (SPGW) arranged to establish a connection (C) from a real estate administrator request gateway (RAGW) associated with the real estate administrator data system (RA) for transfer of a request (R);
- a request generator (RG) arranged to generate the request (R) and submit the request (R) through the heat sub-metering service provider request gateway (SPGW); and
- a response handler (RSH) arranged to handle a response (RS) received through the heat sub-metering service provider request gateway (SPGW) to the real estate administrator data system (RA) via said connection (C).

12. A method of exchanging data between a real estate administrator data system (RA) comprising real estate administrator owned data (RAD) and a heat sub-metering service provider data system (SP) comprising heat sub-metering service provider owned data (SPD), the real estate administrator owned data (RAD) at least comprising data related to said consumption units (CU) and said properties (B), the method comprising
- the heat sub-metering service provider data system (SP) receiving sub-meter readings (SMR) from a number of measuring devices (M), at least some of which being consumption meters in the form of heat cost allocation meters, located in consumption units (CU) located in properties (B) which are at least partially managed by the real estate administrator data system (RA), whereby the sub-meter readings (SMR) get comprised by the service provider owned data (SPD);
- establishing a connection (C) between the real estate administrator data system (RA) and the heat sub-metering service provider system (SP);
- generating a request (R) by means of a request generator (RG) associated with the heat sub-metering service provider data system (SP);
- transferring the request (R) from the heat sub-metering service provider data system (SP) to the real estate administrator data system (RA) via the connection (C);
- handling the request (R) by means of a request handler (RH) associated with the real estate administrator data system (RA);
- generating a response (RS) to the request (R) by means of a response generator (RSG) associated with the real estate administrator data system (RA);
- handling the response (RS) by means of a response handler (RSH) associated with the heat sub-metering service provider data system (SP).

13. The method of exchanging data according to any of the previous claims, wherein the method is carried out by the data integration system (DIS) according to any of the claims 1 - 10.

14. A computer program product comprising computer readable instructions for execution by a heat sub-metering service provider data system (SP) comprising at least a processing unit, a memory unit and network connectivity, the computer readable instructions comprising
- first computer readable instructions which when executed causes the heat sub-metering service provider data system (SP) to receive sub-meter readings (SMR) from a number of measuring devices (M), at least some of which being consumption meters in the form of heat cost allocation meters, located in properties (B) which are at least partially managed by a real estate administrator data system (RA), whereby the sub-meter readings (SMR) get comprised by service provider owned data (SPD);
- second computer readable instructions which when executed causes the heat sub-metering service provider data system (SP) to establish a connection (C) to a real estate administrator data system (RA);
- third computer readable instructions which when executed causes the heat sub-metering service provider data system (SP) to generate a request (R) comprising a subset of the service provider owned data (SPD) and provide the request (R) to the real estate administrator data system (RA) via the connection (C);
- fourth computer readable instruction which when executed causes the heat sub-metering service provider data system (SP) to receive a response (RS) from the real estate administrator data system (RA) via the connection (C).

15. The computer program product according to claim 14, further comprising computer readable instructions which when executed performs the method of exchanging data according to claim 12 or 13.
